# EUROPÄISCHE PATENTSCHRIFT

(11) **EP 2 978 895 B1**
(45) Veröffentlichungstag und Bekanntmachung des Hinweises auf die Patenterteilung: **30.11.2016**
(21) Anmeldenummer: 14713827.5
(22) Anmeldetag: 27.03.2014
(51) Int. Cl.: D21H 27/00, D21H 27/30, D21C 5/02, D21F 9/00, D21F 11/04, D21F 11/08, D21H 11/00, D21H 11/04, D21H 11/14, D21H 23/04, D21H 15/02

(54) **VERFAHREN ZUM HERSTELLEN EINES KERNKARTONS UND KERNKARTON FÜR EINEN SCHICHTSTOFF**
METHOD FOR PRODUCING A CORE CARD, AND CORE CARD FOR A LAMINATE
PROCÉDÉ SERVANT À FABRIQUER UNE PARTIE CENTRALE EN CARTON, ET PARTIE CENTRALE EN CARTON DESTINÉE À UN STRATIFIÉ

(30) Priorität: 28.03.2013 WO PCT/EP2013/056760
(43) Veröffentlichungstag der Anmeldung: 03.02.2016
(73) Patentinhaber: Mayr-Melnhof Karton AG, 1041 Wien (AT)
(72) Erfinder: ANNOUN, Zakaria, 40699 Erkrath (DE); MÜHLHAUSER, Martin, A-8130 Frohnleiten (AT); WANNEMACHER, Kurt, 41515 Grevenbroich (DE); NEUMANN, Christian, A-1160 Wien (AT)
(74) Vertreter: Hofstetter, Schurack & Partner
(86) Internationale Anmeldenummer: PCT/EP2014/056217
(87) Internationale Veröffentlichungsnummer: WO 2014/154832

(56) Entgegenhaltungen:
- WO-A1-2009/077001
- WO-A2-2007/063182
- DE-A1-102006 057 861
- DE-C1- 10 218 265

## Beschreibung

Die Erfindung betrifft ein Verfahren zum Herstellen eines Kernkartons für einen Schichtstoff, einen Kernkarton mit einem Schichtsystem, einen Schichtstoff mit einem derartigen Kernkarton sowie eine Vorrichtung zum Herstellen eines solchen Kernkartons.

Laminierte Schichtstoffe bestehen in der Regel aus mehreren Lagen harzgetränkter Kernkartonschichten, die unter Hochdruck zusammengefügt werden. Derartige Schichtstoffe bilden als bahnförmige Trägermaterialien die Basis für Arbeitsplatten, Fensterbänke, Kaschierungen, Raumverkleidungen, Trennwände und vieles mehr. Die Kernkartonschichten werden aus einzelnen Lagen gleicher oder unterschiedlicher Kernkartone hergestellt, die je nach Flächengewicht grundsätzlich auch als Kernpapiere oder Kernpappen bezeichnet werden können. Jeder Kernkarton weist seinerseits ein Schichtsystem mit einer oder mehreren Schichten aus Faserstoffen auf. In Abhängigkeit des jeweiligen Einsatzzwecks des laminierten Schichtstoffs können neben den Schichten aus Kernkartonen noch weitere Schichten bzw. Lagen aus anderen Materialien zur Erfüllung bestimmter Eigenschaften vorgesehen sein. Weiterhin sind auch nicht-laminierte Schichtstoffe bekannt, bei denen mehrere Schichten bzw. Lagen von Kernkartonen ohne die Zuhilfenahme von Harzen miteinander verpresst sind.

Kernkartone und -papiere wurden lange Zeit ausschließlich aus Frischfaserstoffen hergestellt, um die spezifischen Anforderungen an Kernkartone im Hinblick auf Reißfestigkeit, Imprägnierbarkeit, Weiterverarbeitbarkeit, optische Anmutung und dergleichen erfüllen zu können. Um den Verbrauch natürlicher Ressourcen und die mit der Verwendung von Frischfaserstoff verbundenen Rohstoffkosten zu verringern, werden manche Kernkartone mittlerweile zumindest anteilig aus recyceltem Altpapier hergestellt. Ein derartiger Kernkarton sowie ein entsprechendes Herstellungsverfahren eines solchen Kernkartons sind beispielsweise der WO 2011/141355 A1 zu entnehmen. Der dort beschriebene Kernkarton besteht zumindest anteilig aus einem wiederaufbereiteten Faserstoffgemisch und umfasst als Additive neben Nassverfestigern insbesondere grenzflächenaktive Wirksubstanzen zur Erhöhung der Kapillarität des Kernkartons. Die Kapillarität stellt eine wichtige Einflussgröße für die Imprägnierbarkeit von Kernkartonen mit Harzen dar.

Als nachteilig an den derzeit bekannten Kernkartonen, welche zumindest anteilig aus Altpapier hergestellt sind, hat sich herausgestellt, dass diese eine vergleichsweise hohe Abrasivität gegenüber Trennwerkzeugen wie beispielsweise Schneiden, Sägen und dergleichen aufweisen. Dies wirkt sich nachteilig auf die Standzeiten der zur Herstellung von Schichtstoffen verwendeten Werkzeuge aus, da die entsprechenden Schleif- und Schneidewerkzeuge hierdurch eine verkürzte Lebensdauer aufweisen und häufiger ausgetauscht werden müssen. Ein weiterer Nachteil besteht in der Verwendung von grenzflächenaktiven Wirksubstanzen, welche eine Belastung des Wasserkreislaufsystems an der Papiermaschine darstellen, die chemischen Gleichgewichte des Maschinenkreislaufs von Kartonmaschinen stören können, zu einer Erhöhung der Herstellungskosten führen und nicht zuletzt Umwelt- und Abwasserbelastungen verursachen.

Aufgabe der vorliegenden Erfindung ist es, ein Verfahren zu schaffen, welches die Herstellung eines Kernkartons für einen Schichtstoff ermöglicht, wobei der Kernkarton trotz zumindest anteiliger Verwendung eines wiederaufbereiteten Faserstoffgemischs eine geringere Abrasivität gegenüber Trennwerkzeugen, eine gute Luftdurchlässigkeit sowie eine verbesserte Kosten- und Umweltbilanz aufweist. Eine weitere Aufgabe der Erfindung besteht darin, einen Kernkarton zu schaffen, der zumindest anteilig aus einem wiederaufbereiteten Faserstoffgemisch besteht, eine geringere Abrasivität gegenüber Trennwerkzeugen, eine gute Luftdurchlässigkeit und somit Imprägnierfähigkeit sowie eine verbesserte Kosten- und Umweltbilanz aufweist. Darüber hinaus ist es Aufgabe der vorliegenden Erfindung, einen entsprechenden Schichtstoff sowie eine Vorrichtung zum Herstellen eines Kernkartons anzugeben.

Die Aufgaben werden erfindungsgemäß durch ein Verfahren mit den Merkmalen des Anspruchs 1, durch einen Kernkarton mit den Merkmalen des Anspruchs 19, durch einen Schichtstoff gemäß Anspruch 25 sowie durch eine Vorrichtung mit den Merkmalen des Anspruchs 28 gelöst. Vorteilhafte Ausgestaltungen der Erfindung sind in den jeweiligen Unteransprüchen angegeben, wobei vorteilhafte Ausgestaltungen des Verfahrens als vorteilhafte Ausgestaltungen des Kernkartons und umgekehrt anzusehen sind.

Ein erster Aspekt der Erfindung betrifft ein Verfahren, welches die Herstellung eines Kernkartons für einen Schichtstoff ermöglicht, wobei der Kernkarton trotz zumindest anteiliger Verwendung eines wiederaufbereiteten Faserstoffgemischs eine geringere Abrasivität gegenüber Trennwerkzeugen, eine gute Luftdurchlässigkeit und somit Imprägnierfähigkeit sowie eine verbesserte Kosten- und Umweltbilanz aufweist. Hierzu werden im Rahmen des erfindungsgemäßen Verfahrens zumindest die Schritte a) Bereitstellen eines wiederaufbereiteten Faserstoffgemischs welches zumindest folgende Eigenschaften aufweist:
- der Feinstoffanteil nach Brecht-Holl beträgt höchsten 50 Gew.-%;
- der Langfaserstoffanteil nach Brecht-Holl beträgt mindestens 10 Gew.-%;
- der Kurzfaseranteil nach Brecht-Holl beträgt höchstens 60 Gew.-%; und
- der Ascheanteil nach ISO 1762 beträgt höchstens 20 Gew.-%,

b) Herstellen wenigstens einer Faserstoffsuspension, welche zumindest einen Anteil des bereitgestellten Faserstoffgemischs enthält, c) Aufbereiten der wenigstens einen Faserstoffsuspension, indem zumindest eine Entaschung der Faserstoffsuspension durchgeführt wird, bis ein Ascheanteil der trockenen Fraktion der Faserstoffsuspension höchstens 15 Gew.-% beträgt, und indem wenigstens ein Additiv zur wenigstens einen Faserstoffsuspension zugegeben wird, wobei das Additiv ausgewählt ist aus einer Gruppe, die aus Retentionsmitteln und Nassverfestigern besteht, und d) Herstellen des Schichtsystems aus der wenigstens einen Faserstoffsuspension durchgeführt. Mit anderen Worten ist es erfindungsgemäß vorgesehen, dass zur Herstellung des Kernkartons zunächst ein wiederaufbereitetes Faserstoffgemisch mit den vorstehend genannten Eigenschaften bereitgestellt wird, aus dem im nächsten Schritt zumindest anteilig wenigstens eine faserhaltige Faserstoffsuspension hergestellt wird. Die genannten Grenzwerte des bereitgestellten Faserstoffgemischs werden dabei mittels des standardisierten Brecht-Holl-Verfahrens, beispielsweise unter Zuhilfenahme eines Brecht-Holl-Fraktionators bzw. gemäß der im Zellcheming Merkblatt VI/1/66 beschriebenen Prüfanweisung bestimmt. Unter einem der Feinstoffanteil von höchsten 50 Gew.-% sind insbesondere Feinstoffanteile von 0 Gew.-%, 1 Gew.-%, 2 Gew.-%, 3 Gew.-%, 4 Gew.-%, 5 Gew.-%, 6 Gew.-%, 7 Gew.-%, 8 Gew.-%, 9 Gew.-%, 10 Gew.-%, 11 Gew.-%, 12 Gew.-%, 13 Gew.-%, 14 Gew.-%, 15 Gew.-%, 16 Gew.-%, 17 Gew.-%, 18 Gew.-%, 19 Gew.-%, 20 Gew.-%, 21 Gew.-%, 22 Gew.-%, 23 Gew.-%, 24 Gew.-%, 25 Gew.-%, 26 Gew.-%, 27 Gew.-%, 28 Gew.-%, 29 Gew.-%, 30 Gew.-%, 31 Gew.-%, 32 Gew.-%, 33 Gew.-%, 34 Gew.-%, 35 Gew.-%, 36 Gew.-%, 37 Gew.-%, 38 Gew.-%, 39 Gew.-%, 40 Gew.-%, 41 Gew.-%, 42 Gew.-%, 43 Gew.-%, 44 Gew.-%, 45 Gew.-%, 46 Gew.-%, 47 Gew.-%, 48 Gew.-%, 49 Gew.-% oder 50 Gew.-% sowie entsprechende Zwischenwerte wie etwa 29,0 Gew.-%, 29,1 Gew.-%, 29,2 Gew.-%, 29,3 Gew.-%, 29,4 Gew.-%, 29,5 Gew.-%, 29,6 Gew.-%, 29,7 Gew.-%, 29,8 Gew.-%, 29,9 Gew.-% usw. zu verstehen. Unter einem Langfaserstoffanteil von mindestens 10 Gew.-% sind insbesondere Langfaserstoffanteile von 10 Gew.-%, 11 Gew.-%, 12 Gew.-%, 13 Gew.-%, 14 Gew.-%, 15 Gew.-%, 16 Gew.-%, 17 Gew.-%, 18 Gew.-%, 19 Gew.-%, 20 Gew.-%, 21 Gew.-%, 22 Gew.-%, 23 Gew.-%, 24 Gew.-%, 25 Gew.-%, 26 Gew.-%, 27 Gew.-%, 28 Gew.-%, 29 Gew.-%, 30 Gew.-%, 31 Gew.-%, 32 Gew.-%, 33 Gew.-%, 34 Gew.-%, 35 Gew.-%, 36 Gew.-%, 37 Gew.-%, 38 Gew.-%, 39 Gew.-%, 40 Gew.-%, 41 Gew.-%, 42 Gew.-%, 43 Gew.-%, 44 Gew.-%, 45 Gew.-%, 46 Gew.-%, 47 Gew.-%, 48 Gew.-%, 49 Gew.-%, 50 Gew.-%, 51 Gew.-%, 52 Gew.-%, 53 Gew.-%, 54 Gew.-%, 55 Gew.-%, 56 Gew.-%, 57 Gew.-%, 58 Gew.-%, 59 Gew.-%, 60 Gew.-%, 61 Gew.-%, 62 Gew.-%, 63 Gew.-%, 64 Gew.-%, 65 Gew.-%, 66 Gew.-%, 67 Gew.-%, 68 Gew.-%, 69 Gew.-%, 70 Gew.-%, 71 Gew.-%, 72 Gew.-%, 73 Gew.-%, 74 Gew.-%, 75 Gew.-%, 76 Gew.-%, 77 Gew.-%, 78 Gew.-%, 79 Gew.-%, 80 Gew.-%, 81 Gew.-%, 82 Gew.-%, 83 Gew.-%, 84 Gew.-%, 85 Gew.-%, 86 Gew.-%, 87 Gew.-%, 88 Gew.-%, 89 Gew.-%, 90 Gew.-%, 91 Gew.-%, 92 Gew.-%, 93 Gew.-%, 94 Gew.-%, 95 Gew.-%, 96 Gew.-%, 97 Gew.-%, 98 Gew.-%, 99 Gew.-% oder 100 Gew.-% sowie entsprechende Zwischenwerte zu verstehen. Ein Kurzfaseranteil von höchstens 60 Gew.-% bezeichnet daher dementsprechend Kurzfaseranteile von 0 Gew.-%, 1 Gew.-%, 2 Gew.-%, 3 Gew.-%, 4 Gew.-%, 5 Gew.-%, 6 Gew.-%, 7 Gew.-%, 8 Gew.-%, 9 Gew.-%, 10 Gew.-%, 11 Gew.-%, 12 Gew.-%, 13 Gew.-%, 14 Gew.-%, 15 Gew.-%, 16 Gew.-%, 17 Gew.-%, 18 Gew.-%, 19 Gew.-%, 20 Gew.-%, 21 Gew.-%, 22 Gew.-%, 23 Gew.-%, 24 Gew.-%, 25 Gew.-%, 26 Gew.-%, 27 Gew.-%, 28 Gew.-%, 29 Gew.-%, 30 Gew.-%, 31 Gew.-%, 32 Gew.-%, 33 Gew.-%, 34 Gew.-%, 35 Gew.-%, 36 Gew.-%, 37 Gew.-%, 38 Gew.-%, 39 Gew.-%, 40 Gew.-%, 41 Gew.-%, 42 Gew.-%, 43 Gew.-%, 44 Gew.-%, 45 Gew.-%, 46 Gew.-%, 47 Gew.-%, 48 Gew.-%, 49 Gew.-%, 50 Gew.-%, 51 Gew.-%, 52 Gew.-%, 53 Gew.-%, 54 Gew.-%, 55 Gew.-%, 56 Gew.-%, 57 Gew.-%, 58 Gew.-%, 59 Gew.-% oder 60 Gew.-% sowie entsprechende Zwischenwerte. Es versteht sich, dass sich die Gewichtsanteile aller Bestandteile eines Materials immer und ausschließlich zu 100% ergänzen. Die vorliegende Erfindung basiert dabei auf der Erkenntnis, dass bei der Verwendung von Altpapier zur Herstellung von Kernkartonen entsprechend große Mengen an Druckfarben, anhängenden Verunreinigungen, Feinstoffen und Aschebestandteilen in die zur Herstellung des Kernkartons verwendete(n) Faserstoffsuspension(en) eingetragen werden. Die Aschebestandteile, welche auch als Glührückstände bezeichnet werden können, umfassen anorganische Verbindungen wie beispielsweise Calciumkarbonat, das während der Papierherstellung in der Oberflächenveredelung von Papieren und Kartonen als Strichbestandteil eingesetzt wird. Weitere Aschebestandteile können Füllstoffe und Pigmente wie beispielsweise Talkum, Titandioxid, Aluminiumhydroxid, Aluminiumoxid, Bentonit, Bariumsulfat, Gips, Kaoline und dergleichen sein, die ebenfalls häufig bei der Papier- und Kartonherstellung verwendet werden. Als Feinstoffe werden in erster Linie cellulosehaltige Fasermaterialien und Faserreste bezeichnet, die gemäß der Definition nach Brecht-Holl eine kürzere Faserlänge als sogenannte Kurzfasern aufweisen.

Wie die Anmelderin erkannt hat, ist in erster Linie der Ascheanteil für die Abrasivität des fertigen Kernkartons gegenüber üblichen Verarbeitungswerkzeugen verantwortlich und verursacht stark verkürzte Lebensdauern sowie hohe Standzeiten der verwendeten Trennwerkzeuge. Weiterhin hat die Anmelderin festgestellt, dass der Einfluss von Asche - und in geringerem Ausmaß auch von Feinstoffen - auf die Imprägnierbarkeit und Luftdurchlässigkeit des fertigen Kernkartons mit Harzen sehr negativ ist, da sie sich aufgrund ihrer geringen Größe in den Zwischenräumen zwischen den Fasern, den sogenannten Kapillaren, anreichern und diese zusetzen. Damit werden bei der späteren Herstellung eines laminierten Schichtstoffs die Harzimprägnierung beziehungsweise die Füllung der vorhandenen Kapillaren des Kernkartons mit Harz oder ähnlichen Substanzen und damit die Qualität des laminierten Schichtstoffs erheblich verschlechtert. Unter Harzen und ähnlichen Substanzen werden im Rahmen der vorliegenden Erfindung generell Polymere und Grundstoffe für organische Kunststoffe verstanden. Harzen und harzähnliche Substanzen weisen daher bei Raumtemperatur in der Regel feste bis flüssige organische Stoffe auf und umfassen zudem klebrige und nichtkristalline Materialien, die in den gängigen organischen Lösungsmitteln löslich, jedoch schlecht löslich bzw. unlöslich in Wasser sind. Die Harze und harzähnlichen Substanzen können grundsätzlich natürlich vorkommende und/oder synthetische Materialien umfassen und erscheinen üblicherweise gelblich bis bräunlich bzw. klar bis trüb. Auch die Herstellung und Weiterverarbeitbarkeit von nicht-laminierten Schichtstoffen wird durch Asche und Feinstoffe im Kernkarton nachteilig beeinflusst. Durch die spezifische Auswahl von Altpapier mit den vorstehend genannten Eigenschaften wird vorteilhafterweise sichergestellt, dass die in Schritt b) hergestellte Faserstoffsuspension, die bezüglich ihres Fasergehalts grundsätzlich teilweise oder vollständig aus dem in Schritt a) ausgewählten Altpapier bestehen kann, von vornherein einen möglichst geringen Ascheanteil und darüber hinaus einen ausreichend hohen Anteil an Langfasern enthält, die vorteilhaft zu einer guten Porosität, Luftdurchlässigkeit und somit Imprägnierbarkeit des Kernkartons beitragen. Falls die Faserstoffsuspension bezüglich ihres Faserstoffanteils nur anteilig aus dem bereitgestellten Altpapier hergestellt wird, werden als weitere Faserstoffkomponente bevorzugt Frischfasern verwendet. Allerdings kann es im Rahmen der Erfindung ohne weiteres vorgesehen sein, dass der Faserstoffanteil der Faserstoffsuspension ausschließlich aus dem bereitgestellten Altpapier besteht, da aufgrund der spezifischen Auswahl des Altpapiers die verschiedenen Vorteile der Erfindung auch bei einem 100%igen Altpapieranteil realisiert werden können. In Schritt c) wird die Faserstoffsuspension dahingehend aufbereitet, dass einerseits durch eine Reinigung bzw. Entaschung der Faserstoffsuspension der Ascheanteil der Trockenfraktion auf einen Wert von höchsten 15 Gew.-% eingestellt wird und dass andererseits wenigstens ein Additiv aus der Gruppe der Retentionsmittel und Nassverfestiger zur Faserstoffsuspension zugegeben wird. Es versteht sich, dass auf den Reinigungs- bzw. Entaschungsschritt grundsätzlich verzichtet werden kann, wenn der Ascheanteil der Faserstoffsuspension aufgrund der Verwendung besonders aschearmer oder sogar aschefreier Rohstoffe bereits von vornherein unter dem jeweils geforderten Grenzwert liegt und keine darüber hinausgehende Reinigung der Faserstoffsuspension nötig erscheint. Die Zugabe eines Retentionsmittels ermöglicht die Steuerung der Entwässerung der Faserstoffsuspension bei der Schichtbildung, während die Zugabe eines Nassfestmittels die Nassreißfestigkeit der gebildeten Schicht vorteilhaft erhöht. In diesem Zusammenhang wird darauf hingewiesen, dass prozentuale Angaben im Rahmen der vorliegenden Erfindung grundsätzlich als Gewichtsprozente anzusehen sind sofern nichts Gegenteiliges angegeben ist. Die Reinigung bzw. Entaschung der Faserstoffsuspension kann dabei grundsätzlich einen oder mehrere gegebenenfalls unterschiedliche Aufreinigungsschritte umfassen. Die Zugabe des wenigstens einen Additivs kann grundsätzlich einmal oder mehrmals vor, während oder nach der Reinigung bzw. Entaschung vorgenommen werden, wobei eine Zugabe nach Abschluss der Entaschung bevorzugt ist, um unnötige Verluste an Additiv und etwaige Störungen der Aufreinigung zuverlässig zu vermeiden. Aufgrund des spezifisch ausgewählten Altpapiers und der kontrollierten Entaschung der Faserstoffsuspension kann im Gegensatz zum Stand der Technik vorteilhaft auf die Zugabe von grenzflächenaktiven Additiven verzichtet werden, ohne dass Einbußen im Hinblick auf Luftdurchlässigkeit, Imprägnierbarkeit und Nassreißfestigkeit des Kernkartons hingenommen werden müssten. Dies ermöglicht die Realisierung erheblicher Kosteneinsparungen und verbessert zusammen mit der Verwendung von recyceltem Altpapier die Umweltbilanz des erfindungsgemäß hergestellten Kernkartons signifikant. Neben den genannten Additiven aus der Gruppe der Retentionsmittel und Nassverfestiger können jedoch grundsätzlich noch weitere Additive verwendet werden, um die Faserstoffsuspension bzw. den Kernkarton und/oder einen aus dem Kernkarton hergestellten Schichtstoff mit gewünschten Eigenschaften auszustatten. Grundsätzlich kann ein Kernkarton hergestellt werden, der ausschließlich aus dem einoder mehrschichtigen Schichtsystem besteht. Alternativ können zusätzlich zum Schichtsystem weitere Elemente, beispielsweise Kunststofffolien, Metallfolien oder dergleichen mit dem Schichtsystem verbunden werden. Weiterhin kann grundsätzlich vorgesehen sein, dass ein Schichtsystem hergestellt wird, das nur aus einer einzigen Schicht besteht. Alternativ kann ein Schichtsystem aus mehreren Schichten hergestellt werden. Die Herstellung des Schichtsystems kann beispielsweise mittels einer Kartonmaschine erfolgen.

Zur besonders einfachen Einhaltung der in Schritt a) geforderten Eigenschaften hat es sich als vorteilhaft gezeigt, wenn als wiederaufbereitetes Faserstoffgemisch Altpapier, insbesondere krafthaltige Altpapiersorten der Hauptgruppe 4 und/oder OCC-Altpapier verwendet wird. Die Angabe "krafthaltige Altpapiersorte der Hauptgruppe 4" bezieht sich dabei auf die CEPI-Liste der europäischen Standardsorten für Altpapier und umfasst:
- Neue Späne aus Wellpappe: Neue Späne aus Wellpappe mit Decken aus Kraft- oder Testlinern;
- Unbenutzte Kraftwellpappe: Unbenutzte Verpackungen, Bogen und Späne aus Wellpappe, ausschließlich mit Kraftlinern. Welle aus Zellstoff oder Halbzellstoff.
- Unbenutzte Wellpappe: Unbenutzte Verpackungen, Bogen und Späne aus Wellpappe mit Decken aus Kraft- oder Testlinern;
- Gebrauchte Kraftwellpappe 1: Gebrauchte Verpackungen aus Wellpappe, Decken ausschließlich mit Kraftlinern, Welle aus Zellstoff oder Halbzellstoff;
- Gebrauchte Kraftwellpappe 2: Gebrauchte Verpackungen aus Wellpappe, mit Decken aus Kraftlinern oder Testlinern, wobei jedoch mindestens eine Decke aus Kraftlinern hergestellt ist;
- Gebrauchte Kraftpapiersäcke: Saubere, gebrauchte Kraftpapiersäcke, nassfest und nicht nassfest;
- Gebrauchte Kraftpapiersäcke mit kunststoffbeschichteten Papieren, saubere, gebrauchte Kraftpapiersäcke, nassfest und nicht nassfest, kunststoffbeschichtete Papiere sind zugelassen;
- Unbenutzte Kraftpapiersäcke: Unbenutzte Kraftpapiersäcke, nassfest oder nicht nassfest;
- Unbenutzte Kraftpapiersäcke mit kunststoffbeschichteten Papieren: Unbenutzte Kraftpapiersäcke, nassfest oder nicht nassfest, kunststoffbeschichtete Papiere sind zugelassen;
- Gebrauchtes Kraftpapier: Kraftpapier und -pappe, gebraucht, naturfarbig oder hell.
- Unbenutztes Kraftpapier: Späne und andere Kraftpapiere und -pappen, unbenutzt, naturfarbig; und
- Unbenutzter Krafttragekarton: Unbenutzter Krafttragekarton, nassfestes Papier zugelassen.

Hierdurch können die Vorgaben im Hinblick auf Feinstoffanteil, Langfaserstoffanteil, Kurzfaseranteil und Ascheanteil vergleichsweise einfach eingestellt werden. Unter OCC-Altpapier werden sogenannte "old corrugated containers", das heißt gebrauchte Wellpappen, Wellbehälter, Kistenvollpappen etc. verstanden, die vorzugsweise aus Amerika stammen (american old corrugated containers, AOCC). AOCC haben unter anderem den Vorteil, dass sie in der Regel von vornherein einen relativ geringen Ascheanteil aufweisen, so dass die diesbezügliche Aufreinigung des Faserstoffgemischs entsprechend vereinfacht wird oder sogar vollständig vermieden werden kann.

In einer vorteilhaften Ausgestaltung der Erfindung wird ein Schichtsystem hergestellt, welches einen Ascheanteil von höchstens 15 Gew.-%, insbesondere von höchstens 8 Gew.-% und vorzugsweise von höchstens 4 Gew.-% aufweist und/oder welches einen Anteil von mindestens 80 %, vorzugsweise von mindestens 95 % des bereitgestellten wiederaufbereiteten Faserstoffgemischs enthält. Unter einem Ascheanteil von höchstens 15 Gew.-% sind insbesondere Ascheanteile von 15,0 Gew.-%, 14,5 Gew.-%, 14,0 Gew.-%, 13,5 Gew.-%, 13,0 Gew.-%, 12,5 Gew.-%, 12,0 Gew.-%, 11,5 Gew.-%, 11,0 Gew.-%, 10,5 Gew.-%, 10,0 Gew.-%, 9,5 Gew.-%, 9,0 Gew.-%, 8,5 Gew.-%, 8,0 Gew.-%, 7,5 Gew.-%, 7,0 Gew.-%, 6,5 Gew.-%, 6,0 Gew.-%, 5,5 Gew.-%, 5,0 Gew.-%, 4,5 Gew.-%, 4,0 Gew.-%, 3,5 Gew.-%, 3,0 Gew.-%, 2,5 Gew.-%, 2,0 Gew.-%, 1,5 Gew.-%, 1,0 Gew.-%, 0,5 Gew.-% oder 0 Gew.-% sowie entsprechende Zwischenwerte wie beispielsweise 5,0 Gew.-%, 4,9 Gew.-%, 4,8 Gew.-%, 4,7 Gew.-%, 4,6 Gew.-%, 4,5 Gew.-%, 4,4 Gew.-%, 4,3 Gew.-%, 4,2 Gew.-%, 4,1 Gew.-%, 4,0 Gew.-% etc. zu verstehen. Hierdurch kann ein Kernkarton hergestellt werden, der eine besonders niedrige Abrasivität gegenüber Trennwerkzeugen besitzt und zudem besonders hohe Qualitätsansprüche hinsichtlich Luftdurchlässigkeit und Imprägnierbarkeit erfüllt. Dabei kann grundsätzlich vorgesehen sein, dass alle Schichten des Schichtsystems mit einem Ascheanteil unter 15 Gew.-% hergestellt werden, oder dass manche Schichten einen höheren Ascheanteil und andere Schichten einen entsprechend niedrigeren Ascheanteil besitzen, solange sichergestellt ist, dass das gesamte Schichtsystem einen Ascheanteil von höchstens 15 Gew.-% besitzt. Alternativ oder zusätzlich kann vorgesehen sein, dass die Faserstoffsuspension bezüglich ihres Feststoffgehalts zu mindestens 80 Gew.-% aus dem wiederaufbereiteten Faserstoffgemisch, beispielsweise aus Altpapier besteht. Unter einem Faserstoffgemisch-Anteil von mindestens 80 % sind insbesondere Anteile von 80 %, 81 %, 82 %, 83 %, 84 %, 85 %, 86 %, 87 %, 88 %, 89 %, 90 %, 91 %, 92 %, 93 %, 94 %, 95 %, 96 %, 97 %, 98 %, 99 % oder 100 % sowie entsprechende Zwischenwerte wie beispielsweise 95,0 %, 95,1 %, 95,2 %, 95,3 %, 95,4 %, 95,5 %, 95,6 %, 95,7 %, 95,8 %, 95,9 % oder 96,0 % zu verstehen. Mit anderen Worten ist vorgesehen, dass der Faseranteil der Faserstoffsuspension - abgesehen von Additiven - zumindest zu 80 % oder vollständig aus dem wiederaufbereiteten Faserstoffgemisch besteht. Hierdurch werden eine besonders gute Umweltbilanz sowie erhebliche Einsparungen durch den Verzicht auf Frischfasem erreicht.

In einer weiteren vorteilhaften Ausgestaltung der Erfindung ist vorgesehen, dass wenigstens einer Faserstoffsuspension vor dem Herstellen des Schichtsystems Frischfasern, insbesondere Zellstoff, zugemischt werden, wobei der Anteil der Frischfasern an den Gesamtfasern der Faserstoffsuspension vorzugsweise höchstens 20 Gew.-% beträgt. Durch das Zumischen von Frischfasern können grundsätzlich Schichten mit höheren Luftdurchlässigkeitswerten hergestellt werden. Vorzugsweise werden die Frischfasern der Faserstoffsuspension mit einem auf den Faseranteil der Faserstoffsuspension bezogenen Gewichtsanteil von 1,0 Gew.-%, 1,5 Gew.-%, 2,0 Gew.-%, 2,5 Gew.-%, 3,0 Gew.-%, 3,5 Gew.-%, 4,0 Gew.-%, 4,5 Gew.-%, 5,0 Gew.-%, 5,5 Gew.-%, 6,0 Gew.-%, 6,5 Gew.-%, 7,0 Gew.-%, 7,5 Gew.-%, 8,0 Gew.-%, 8,5 Gew.-%, 9,0 Gew.-%, 9,5 Gew.-%, 10,0 Gew.-%, 10,5 Gew.-%, 11,0 Gew.-%, 11,5 Gew.-%, 12,0 Gew.-%, 12,5 Gew.-%, 13,0 Gew.-%, 13,5 Gew.-%, 14,0 Gew.-%, 14,5 Gew.-%, 15,0 Gew.-%, 15,5 Gew.-%, 16,0 Gew.-%, 16,5 Gew.-%, 17,0 Gew.-%, 17,5 Gew.-%, 18,0 Gew.-%, 18,5 Gew.-%, 19,0 Gew.-%, 19,5 Gew.-% oder 20,0 Gew.-% zugemischt. Die Zumischung kann dabei grundsätzlich zu jedem beliebigen Verfahrenszeitpunkt vor der Herstellung des Schichtsystems einfach oder mehrfach erfolgen. Vorzugsweise erfolgt die Zumischung unmittelbar vor der Herstellung des Schichtsystems, um Frischfaserverluste, unerwünschte Verkürzungen der Frischfasern und dergleichen während der Aufbereitung der Faserstoffsuspension zu vermeiden.

Weitere Vorteile ergeben sich, wenn zum Aufbereiten der Faserstoffsuspension ein Sortierer und/oder eine vorzugsweise mehrstufige Cleaneranlage und/oder ein Disperger und/oder eine Flotationseinrichtung und/oder eine Variospliteinrichtung verwendet wird. Hierdurch kann eine besonders zuverlässige Aufreinigung und Entaschung der altpapierhaltigen Faserstoffsuspension bei gleichzeitig besonders schonender Behandlung des Langfaseranteils erreicht werden. Dabei können grundsätzlich beliebige Kombinationen der angegebenen Aufbereitungseinrichtungen verwendet werden. Hierdurch können einerseits Eigenheiten des ausgewählten Altpapiers besonders gut berücksichtig werden, andererseits können auf diese Weise Faserstoffsuspensionen unterschiedlich aufbereitet werden, um ein Schichtsystem mit unterschiedlichen Schichten herstellen zu können. Ein Sortierer kann beispielsweise als zentrifugal arbeitender Grobschmutzsortierer verwendet werden, der aus einem feststehenden Sortierkorb und einem Rotor besteht, der durch seine Bewegung Überdruck und Unterdruck erzeugt, wodurch Fremdstoffe wie Kunststoff, Glas und Metall als Rejekt aus der Faserstoffsuspension ausgeschleust und die Sortierkorbflächen freigehalten werden. Mit Hilfe einer Cleaneranlage können schwerere und abrasive Teilchen mit einem höheren spezifischen Gewicht als Zellulosefaser, beispielsweise Sand, Glas und Aschekomponenten, aus der Faserstoffsuspension abgetrennt werden. Hierzu wird die Faserstoffsuspension bei hoher Wasserverdünnung (beispielsweise 2% Stoffdichte) mittels Zentrifugalbeschleunigung gegen eine konische Wand der Cleaneranlage gedrückt und über die Schwerkraft am unteren Ende der Cleaneranlage als Rejekt ausgeschleust. Dieses Trennungsverfahren kann vorzugsweise in 3 oder 4 Stufen durchgeführt werden, um einen entsprechend hohen Reinigungsgrad zu erzielen. Alternativ oder zusätzlich können Disperger bzw. Dispergergarnituren verwendet werden, welche eine Homogenisierung der Faserstoffsuspension und eine Zerkleinerung von etwaigen Verunreinigungen unter die Sichtbarkeitsgrenze ermöglichen.

Je größer dabei der Abstand der Zahnkränze und der Zähne auf der Dispergergarnitur zueinander sind und je größer der Spalt zwischen den Dispergerscheiben ist, desto schonender kann die Stoffdispergierung erfolgen, so dass die Homogenisierung der Faserstoffsuspension zumindest weitgehend ohne bzw. ohne nennenswerte Verkürzung der Fasern durchgeführt werden kann. Bei einer Flotationseinrichtung werden Feinstoffe, Asche, Druckfarben und der gleichen durch Anlagerungen an Luftblasen zur Oberfläche flotiert und können aus der Faserstoffsuspension ausgetragen werden. Bei einer Variospliteinrichtung wird die Faserstoffsuspension zwischen eine rotierende Walze und ein rotierendes Sieb eingespritzt. Das rotierende Sieb presst dabei die Faserstoffsuspension gegen die rotierende Walze. Dadurch wird viel Wasser aus der Faserstoffsuspension ausgetragen, wobei mit dem Wasser gleichzeitig auch Asche und Feinstoffe ausgetragen werden. Eine Variospliteinrichtung kann daher gleichzeitig zur Eindickung der Faserstoffsuspension verwendet werden. Vorzugsweise werden zur Entaschung der Faserstoffsuspension zumindest eine Grobschmutzsortierung, insbesondere mit Hilfe eines Sortierers, sowie eine Feinschmutzsortierung, insbesondere mittels einer vorzugsweise mehrstufigen Cleaneranlage, durchgeführt.

Indem wenigstens eine Faserstoffsuspension vor dem Herstellen des Schichtsystems eingedickt wird, ist eine präzise Einstellung des Faser- und Feststoffgehalts ermöglicht. Darüber hinaus erlaubt das Eindicken eine einfachere Handhabung und Zwischenlagerung der Faserstoffsuspension, beispielsweise in einer Vorratsbütte. Weiterhin kann die Schichtbildung auf der Kartonmaschine durch einen Eindickungsschritt besonders präzise erfolgen werden. Darüber hinaus ergeben sich verschiedene Zeit- und Kostenvorteile, da die erforderlichen Trocknungsstrecken und -zeiten entsprechend verkürzt werden können.

Es kann vorgesehen sein, dass zumindest ein Teil wenigstens einer Faserstoffsuspension vor dem Herstellen des Schichtsystems in einen Langfaseranteil und einen Kurzfaseranteil fraktioniert wird. Mit anderen Worten kann es vorgesehen sein, dass im Rahmen der Aufbereitung der Faserstoffsuspension eine Doppelfraktionierung, das heißt eine Trennung von Kurz- und Langfasern vorgenommen wird. Dabei kann grundsätzlich nur ein Teil der Faserstoffsuspension oder die gesamte Faserstoffsuspension fraktioniert werden. Bei aus dem Stand der Technik bekannten Sortierverfahren werden Langfaser normalerweise als Rejekt erkannt und aussortiert. Die Besonderheit des vorliegenden Verfahrensschritts liegt darin, dass die Langfasern vom Rejekt der Fraktionierer zurückgewonnen und nicht aus dem Stoffsystem ausgeschleust werden. Das kann beispielsweise durch eine besonders hohe Verdünnung, Anpassung der Rotordrehzahlen eines Sortierers und durch die Anpassung der Differenzdrücke zwischen Einlauf und Auslauf eines Fraktionierers erfolgen. Wie bereits erwähnt sind die Langfaser im Rahmen des erfindungsgemäßen Verfahrens für die Porosität, Luftdurchlässigkeit und Imprägnierbarkeit des Kernkartons von großer Bedeutung. Durch die Auftrennung von Kurz- und Langfasern wird die Möglichkeit geschaffen, den Anteil von Kurz- und Langfasern in der Faserstoffsuspension besonders präzise einzustellen, so dass das Schichtsystem mit dementsprechend besonders präzisen Eigenschaften hergestellt werden kann. Grundsätzlich gilt, dass die Porosität, Luftdurchlässigkeit und Imprägnierbarkeit einer Schicht umso höher sind, je größer die Faserlänge des Faserstoffes und je höher der Langfaseranteil im Gesamtfaserstoff sind.

Es kann vorgesehen sein, dass der Langfaseranteil und/oder der Kurzfaseranteil mit Wasserdampf beaufschlagt und/oder homogenisiert und/oder dispergiert wird. Durch das Beaufschlagen mit Wasserdampf werden die Fasern geschmeidig und bruchresistenter, wodurch unerwünschte Beschädigungen und Faserverkürzung vorteilhaft verhindert werden. Durch Homogenisieren und/oder Dispergieren der Fasern kann die Qualität der im Folgenden hergestellten Schicht weiter verbessert und ihre Eigenschaften insbesondere im Hinblick auf ihre Porosität und Luftdurchlässigkeit besonders präzise eingestellt werden. Die Homogenisierung bzw. Dispergierung kann beispielsweise mittels eines Dispergers erfolgen, wobei die Beaufschlagung mit Wasserdampf vorzugsweise vor dem Eintritt der Faserstoffsuspension in den Disperger erfolgt.

Weitere Vorteile ergeben sich, wenn der Langfaseranteil und der Kurzfaseranteil nach dem Fraktionieren in einem vorbestimmten Verhältnis zur Faserstoffsuspension gemischt werden. Dabei kann grundsätzlich vorgesehen sein, dass die Faserstoffsuspension durch gezieltes Mischen von Lang- und Kurzfasern rekonstituiert wird oder dass die Lang- und Kurzfasern im vorbestimmten Verhältnis zur Faserstoffsuspension zugemischt werden. Auch hierdurch kann das Schichtsystem mit dementsprechend besonders präzisen Eigenschaften hergestellt werden.

Eine weitere Möglichkeit zur besonders präzisen Einstellung der spezifischen Eigenschaften des Schichtsystems bzw. des Kernkartons ist erfindungsgemäß dadurch geschaffen, dass das Schichtsystem mit wenigstens zwei und vorzugsweise mit wenigstens drei Schichten hergestellt wird. Beispielsweise kann das Schichtsystem mit 2, 3, 4, 5, 6, 7, 8, 9, 10, 11, 12, 13, 14, 15, 16, 17, 18, 19, 20 oder mehr Schichten hergestellt werden, wobei mindestens drei Schichten oder höchstens vier Schichten für viele Anwendungsbereiche besonders bevorzugt sind. Die Zahl der gleichzeitig herstellbaren Schichten wird dabei in der Regel durch die jeweils verwendete Kartonmaschine, Papiermaschine, Wellpappenmaschine oder dergleichen bestimmt, die beispielsweise eine entsprechende Anzahl an Langsieben, Hybridformern, Obersiebentwässerungen und dergleichen aufweisen muss.

Es kann vorgesehen sein, dass wenigstens zwei unterschiedlich hergestellte und/oder unterschiedlich aufbereitete Faserstoffsuspensionen zum Herstellen des Schichtsystems verwendet werden. Durch das Vorhandensein mehrerer Schichten sind unterschiedliche Rohstoffrezepturen pro Schicht möglich. Weiterhin ist eine unterschiedliche Auflösung der Rohstoffzusammensetzung über mehrere Pulper möglich. Schließlich kann je nach Schicht bzw. Lage eine spezifische Aufbereitung der Faserstoffsuspension vorgenommen werden. Hierdurch kann das Schichtsystem optimal an seinen jeweiligen Einsatzzweck angepasst ausgebildet werden.

Eine besonders gute Imprägnierbarkeit des Kernkartons wird in weiterer Ausgestaltung der Erfindung dadurch erzielt, dass wenigstens eine äußere Schicht des Schichtsystems poröser als eine darunterliegende innere Schicht des Schichtsystems hergestellt wird und/oder dass wenigstens eine innere Schicht des Schichtsystems poröser als eine weiter außen liegende Schicht des Schichtsystems hergestellt wird und/oder dass alle Schichten des Schichtsystems mit einer zumindest im Wesentlichen gleichen Porosität hergestellt werden. Insbesondere bei einem Schichtsystem aus drei oder mehr Schichten kann vorgesehen sein, dass die beiden äußeren Schichten poröser als die innere(n) Schicht(en) hergestellt werden. Auf diese Weise kann das beim Imprägnieren verwendete Harz und/oder die harzähnliche Substanz besonders schnell in das gesamte Schichtsystem eindringen und das Schichtsystem vollständig benetzen. Alternativ können die äußeren Schichten auch weniger porös als die innere(n) Schicht(en) hergestellt werden. Ebenso kann vorgesehen sein, dass alle Schichten zumindest im Wesentlichen die gleiche Porosität aufweisen, wobei die Porosität je nach Anwendungszweck des Kernkartons auf höhere oder niedrigere Werte eingestellt werden kann.

Weitere Vorteile ergeben sich, wenn ein Schichtsystem hergestellt wird, bei dem wenigstens eine Schicht des Schichtsystems einen Mahlgrad von höchstens 25°SR (Grad Schopper-Riegler nach DIN EN ISO 5267-1), insbesondere einen Mahlgrad zwischen 20°SR und 8°SR, aufweist und/oder bei dem wenigstens eine Schicht des Schichtsystems einen Mahlgrad von mindestens 8°SR, insbesondere einen Mahlgrad zwischen 15°SR und 60°SR, aufweist. Insbesondere kann vorgesehen sein, dass wenigstens eine Schicht einen Mahlgrad von 25°SR, 24°SR, 23°SR, 22°SR, 21°SR, 20°SR, 19°SR, 18°SR, 17°SR, 16°SR, 15°SR, 14°SR, 13°SR, 12°SR, 11°SR, 10°SR, 9°SR, 8°SR, 7°SR, 6°SR, 5°SR, 4°SR, 3°SR, 2°SR oder 1°SR besitzt und/oder dass wenigstens eine Schicht einen Mahlgrad von 8°SR, 9°SR, 10°SR, 11°SR, 12°SR, 13°SR, 14°SR, 15°SR, 16°SR, 17°SR, 18°SR, 19°SR, 20°SR, 21°SR, 22°SR, 23°SR, 24°SR, 25°SR, 26°SR, 27°SR, 28°SR, 29°SR, 30°SR, 31°SR, 32°SR, 33°SR, 34°SR, 35°SR, 36°SR, 37°SR, 38°SR, 39°SR, 40°SR, 41°SR, 42°SR, 43°SR, 44°SR, 45°SR, 46°SR, 47°SR, 48°SR, 49°SR, 50°SR, 51°SR, 52°SR, 53°SR, 54°SR, 55°SR, 56°SR, 57°SR, 58°SR, 59°SR oder 60°SR besitzt. Je kleiner der Mahlgrad der aufbereiteten Faserstoffsuspension bei der Blattbildung auf der Kartonmaschine ist, desto höher sind die Luftdurchlässigkeit und damit die Imprägnierbarkeit des fertigen Kernkartons. Die Eigenschaft der Porosität wird bei der Gestaltung der einzelnen Schichten des Schichtsystems ausgenutzt. Höhere Mahlgrade der betreffenden Schicht(en) führen demgegenüber zu einer höheren mechanischen Stabilität und Festigkeit des Schichtsystems.

Weitere Vorteile ergeben sich, wenn das Additiv der Faserstoffsuspension bezogen auf die Trockenmasse in einem Gewichtsanteil von höchstens 5,0 % zugegeben wird und/oder dass das Additiv ein Retentionsmittel umfasst, welches der Suspension bezogen auf die Trockenmasse in einem Gewichtsanteil von höchstens 1,2 %, insbesondere zwischen 0,2 % und 0,9 % zugegeben wird, und/oder dass das Additiv einen Nassverfestiger umfasst, welcher der Suspension bezogen auf die Trockenmasse in einem Gewichtsanteil von höchstens 2,2 %, insbesondere zwischen 0,5 % und 2,0 % zugegeben wird. Unter einem Gewichtsanteil von höchstens 5,0 % sind dabei insbesondere Gewichtsanteile von 5,0 %, 4,9 %, 4,8 %, 4,7 %, 4,6 %, 4,5 %, 4,4 %, 4,3 %, 4,2 %, 4,1 %, 4,0 %, 3,9 %, 3,8 %, 3,7 %, 3,6 %, 3,5 %, 3,4 %, 3,3 %, 3,2 %, 3,1 %, 3,0 %, 2,9 %, 2,8 %, 2,7 %, 2,6 %, 2,5 %, 2,4 %, 2,3 %, 2,2 %, 2,1 %, 2,0 %, 1,9 %, 1,8 %, 1,7 %, 1,6 %, 1,5 %, 1,4 %, 1,3 %, 1,2 %, 1,1 %, 1,0 %, 0,9 %, 0,8 %, 0,7 %, 0,6 %, 0,5 %, 0,4 %, 0,3 %, 0,2 %, 0,1 % oder weniger zu verstehen. Retentionsmittel dienen grundsätzlich zur Steuerung der Entwässerung bei der Blatt- bzw. Schichtbildung auf der Kartonmaschine. Als besonders vorteilhaft haben sich grundsätzlich Gewichtsanteile von 0,3 % bis 0,8 % Retentionsmittel gezeigt. Der Einsatz von Nassfestmitteln stellt insbesondere eine abrissfreie Imprägnierung des fertigen Kernkartons mit Tränkharz bei einer anschließenden Herstellung eines Schichtstoffs sicher. In Abhängigkeit der Eigenschaften der Faserstoffsuspension der gewünschten Schichteigenschaften haben sich Gewichtsanteile an Nassfestmittel bis 2,0 % als besonders vorteilhaft gezeigt.

In einer weiteren vorteilhaften Ausgestaltung der Erfindung ist vorgesehen, dass als Additiv wenigstens ein Retentionsmittel aus der Gruppe Polyacrylamide, Polyethylenimine und Polyamidimine und/oder wenigstens ein Nassfestmittel aus der Gruppe Polyamidoamin-Epichlorhydrinharze, Epoxidharze, Polyaminharze, Isocyanatharze, Melamin-Formaldehydharze, Harnstoff-Formaldehydharze, Formaldehydharze, Dialdehydstärke, Glyoxal, Glutaraldehyd und/oder ein Copolymer aus wenigstens zwei der aufgeführten Substanzen verwendet wird. Besonders bevorzugt ist eine Kombination aus Polyethylenimin als Retentionsmittel und Polyamidoamin-Epichlorhydrin als Nassfestmittel.

Weitere Vorteile ergeben sich, wenn als Additiv zusätzlich wenigstens eine Säure und/oder wenigstens eine Base und/oder CO₂ verwendet wird. Durch die Zugabe einer Säure und/oder einer Base kann der pH-Wert des wässrigen Systems gezielt eingestellt und gegebenenfalls gepuffert werden. Gleiches gilt für die Zugabe von CO₂, welches im wässrigen System zu Kohlensäure beziehungsweise zu Carbonaten reagieren kann. Beispielsweise kann mit Hilfe eines reinen Carbonatpuffers, das heißt durch eine Mischung aus Kohlensäure und Hydrogen-carbonat(en), der pH-Wert des wässrigen Systems im pH-Bereich zwischen etwa 7,35 und etwa 7,45 gepuffert werden. Grundsätzlich können jedoch auch andere Puffersysteme mit abweichenden pH-Werten vorgesehen sein. Beispielsweise kann durch einen Kohlensäure-Bicarbonat-Puffer ein pH-Wert zwischen etwa 6,2 und etwa 8,6 eingestellt und gepuffert werden. Ein Essigsäure-Acetat-Puffer kann zur Pufferung im pH-Bereich zwischen etwa 3,7 und etwa 5,7 verwendet werden. In Abhängigkeit der jeweiligen Anwendung ist natürlich auch die Verwendung von Puffersystemen denkbar, die im alkalischen pH-Bereich über pH 7 puffern. Die Verschiebung des pH-Werts zu höheren Werten kann beispielsweise durch Zugabe von Natronlauge oder dergleichen erfolgen. Neben einer Einstellung bzw. Pufferung des pH-Werts kann durch Zugabe einer Säure, einer Base und/oder von CO₂ auch eine vorteilhafte Einstellung der Wasserhärte des Wassersystems und/oder des Aschegehalts und/oder des Füllstoffgehalts des späteren Kernkartons vorgenommen werden. Insbesondere durch Zugabe von CO₂ und/oder durch Zugabe von Hydrogencarbonaten bzw. Carbonaten können in Abhängigkeit des pH-Werts bestimmte Füllstoffe bzw. Aschebestandteile als Carbonate aufgelöst und/oder ausgefällt werden, wodurch eine besonders einfache Aschesteuerung der Faserstoffsuspension ermöglicht ist. Alternativ oder zusätzlich ist natürlich auch eine Ausfällung von Aschebestandteilen als Sulfate, Phosphate, Chloride etc. möglich, indem beispielsweise Schwefelsäure, Phosphorsäure, Salzsäure oder dergleichen, einzeln oder in beliebiger Kombination, zugegeben werden.

In einer weiteren vorteilhaften Ausgestaltung der Erfindung ist vorgesehen, dass bei der Herstellung des Schichtsystems anfallendes Prozesswasser der Kartonmaschine gereinigt, insbesondere mittels einer Mikroflotationseinrichtung entascht wird und/oder zum Herstellen wenigstens einer Faserstoffsuspension verwendet wird. Wegen des kontinuierlichen Eintrags von Asche und Feinstoffen über das verwendete Altpapier reichern sich auch die Siebwasserkreisläufe der Kartonmaschine während der Herstellung des Kernkarton kontinuierlich an. Daher ist eine kontinuierliche Abtrennung von Asche und von Feinstoffen während der Herstellung des Kernkartons vorteilhaft, um die Qualitätsansprüche hinsichtlich Luftdurchlässigkeit, Imprägnierbarkeit und Abrasivität zu erfüllen. Dies kann beispielsweise mit Hilfe einer Mikroflotationseinrichtung (Druckentspannungsflotation) erfolgen. Die Reinigungswirkung der Mikroflotationseinrichtung kann dabei vorteilhaft über die Größe der Luftblasen und den volumenbezogenen Luftgehalt an die mittleren Durchmesser der zu entfernenden Partikel eingestellt werden. Indem das aufgereinigte Prozesswasser wieder zurückgeführt und zur Herstellung der Faserstoffsuspension verwendet wird, ergeben sich aufgrund der Einsparung von Frischwasser weitere Umwelt- und Kostenvorteile.

Weitere Vorteile ergeben sich, indem wenigstens ein Parameter aus der Gruppe Flächengewicht, Feuchtigkeitsgehalt, Dichte, Reißlänge trocken, Reißlänge feucht, Luftdurchlässigkeit, Ascheanteil, Imprägnierbarkeit und Porosität des hergestellten Kernkartons ermittelt wird. Hierdurch ist vorteilhaft eine Qualitätskontrolle des hergestellten Schichtsystems bzw. Kernkartons ermöglicht. Falls bei einem ermittelten Parameter Abweichungen von einem Soll-Wert festgestellt werden, kann vorgesehen sein, dass ein mit dem betreffenden Parameter in Wirkverbindung stehender Prozessparameter entsprechend verändert wird.

Dabei hat es sich als vorteilhaft gezeigt, wenn die Imprägnierbarkeit des Kernkartons mit Hilfe einer Ultraschallmessung ermittelt wird. Dies stellt eine einfache, kostengünstige und schnelle Möglichkeit dar, um die Harzaufnahmefähigkeit des Kernkartons zu beurteilen.

In einer weiteren vorteilhaften Ausgestaltung der Erfindung ist vorgesehen, dass wenigstens ein Kernkarton zum Herstellen eines Schichtstoffs, insbesondere eines HPL-Schichtstoffs und/oder eines CPL-Schichtstoffs und/oder einer Kompaktplatte und/oder als Trägermaterial, insbesondere für Harze oder harzähnlichen Substanzen verwendet wird. Bei einem HPL-Schichtstoff (High Pressure Laminate) handelt es sich um einen im Hochdruckpress-Verfahren hergestellten laminierten Schichtstoff in Plattenform, welcher aus mehreren Lagen des Kernkartons hergestellt wird. Bei einem CPL-Schichtstoff (Continuous Pressure Laminate) handelt es sich um einen laminierten und im kontinuierlichen Verfahren aus mehreren Lagen Kernkarton hergestellten Schichtstoff. Es kann in Plattenform oder als Rollenware hergestellt und beispielsweise zur Beschichtung von Oberflächen verwendet werden. Kompaktplatten bestehen je nach gewünschter Dicke aus entsprechend vielen Lagen des Kernkartons. Sie eignen sich insbesondere für Verkleidungszwecke. Weitere grundsätzlich mögliche Ausgestaltungs- und Verwendungsarten für Schichtstoffe und Kompaktplatten umfassen beispielhaft Fassaden und hinterlüftete Fassadensysteme wie etwa Balkone, Geländerverkleidungen, Brüstungen, Abgrenzungen, Sicht- und Windschutz, Vordächer, Geschäftsportale und Kabinenbau, Innenanwendungen wie beispielsweise Wände, Trennwände, Decken, Türen, Fußbodenbeläge, Treppen, Möbel, Stühle, Tische, Leisten, Fensterbänke, Arbeitsplatten, Theken, Waschtische und Nasszellenelemente sowie Außenanwendungen wie beispielsweise Balkone, Fassaden, Teilfassaden, Laibungen, Außenmöbel oder Schilder. Grundsätzlich kann der erfindungsgemäß hergestellte Kernkarton aber auch zur Herstellung weiterer Schichtstoffe verwendet werden, beispielsweise für Overlays, Dekorpapiere, Dekorkartone, Dekorpappen, Folien, Vliesmaterialien, Vorimprägnate, Trägerplatten, Faserverbundwerkstoffe und Gegenzüge. Weiterhin kann der Einsatz als Trägermaterial für andere Harze oder harzähnlichen Substanzen vorgesehen sein. Dies ist zum Beispiel beim Einsatz zur Herstellung von Teerpappen, Bitumen etc. der Fall.

Dabei hat es sich in weiterer Ausgestaltung der Erfindung als vorteilhaft gezeigt, wenn der wenigstens eine Kernkarton zum Herstellen des Schichtstoffs mit einem Harz oder einer ähnlichen Substanz imprägniert und/oder mit einem Harz oder einer ähnlichen Substanz vorimprägniert und/oder getrocknet und/oder zugeschnitten und/oder mit wenigstens einem Vorimprägnat verpresst wird. Hierdurch kann der Kernkarton optimal an seinen jeweiligen Einsatzzweck und die spezifische Herstellung des Schichtstoffs angepasst werden. Bei einem Vorimprägnat ist das Kernpapier bzw. der Kernkarton nur teilweise imprägniert.

Weitere Vorteile ergeben sich dadurch, dass das Harz ausgewählt ist aus einer Gruppe, die Phenol-Harze, Phenolformaldehyd-Harze, Melamin-Harze und Melaminformaldehyd-Harze umfasst, und/oder dass der Kernkarton mit 30 Gew.-% bis 100 Gew.-% Harz imprägniert wird. Hierdurch können die gewünschten Eigenschaften des Schichtstoffs sowie die Imprägnierbarkeit bzw. Harzaufnahmefähigkeit des Kernkartons oder der Kernkartone optimal berücksichtigt werden. Grundsätzlich ist in der Regel eine hohe Imprägnierbarkeit des Kernkartons erwünscht. Beispielsweise kann der Kernkarton mit 30 Gew.-%, 31 Gew.-%, 32 Gew.-%, 33 Gew.-%, 34 Gew.-%, 35 Gew.-%, 36 Gew.-%, 37 Gew.-%, 38 Gew.-%, 39 Gew.-%, 40 Gew.-%, 41 Gew.-%, 42 Gew.-%, 43 Gew.-%, 44 Gew.-%, 45 Gew.-%, 46 Gew.-%, 47 Gew.-%, 48 Gew.-%, 49 Gew.-%, 50 Gew.-%, 51 Gew.-%, 52 Gew.-%, 53 Gew.-%, 54 Gew.-%, 55 Gew.-%, 56 Gew.-%, 57 Gew.-%, 58 Gew.-%, 59 Gew.-%, 60 Gew.-%, 61 Gew.-%, 62 Gew.-%, 63 Gew.-%, 64 Gew.-%, 65 Gew.-%, 66 Gew.-%, 67 Gew.-%, 68 Gew.-%, 69Gew.-%, 70 Gew.-%, 71 Gew.-%, 72 Gew.-%, 73 Gew.-%, 74 Gew.-%, 75 Gew.-%, 76 Gew.-%, 77 Gew.-%, 78 Gew.-%, 79 Gew.-%, 80 Gew.-%, 81 Gew.-%, 82 Gew.-%, 83 Gew.-%, 84 Gew.-%, 85 Gew.-%, 86 Gew.-%, 87 Gew.-%, 88 Gew.-%, 89 Gew.-%, 90 Gew.-%, 91 Gew.-%, 92 Gew.-%, 93 Gew.-%, 94 Gew.-%, 95 Gew.-%, 96 Gew.-%, 97 Gew.-%, 98 Gew.-%, 99 Gew.-% oder 100 Gew.-% Harz oder einer Harzmischung imprägniert werden. Für die meisten Anwendungen sind Gehalte zwischen 30 Gew.-% und 60 Gew.-% bevorzugt. Wenn der Schichtstoff als HPL-Schichtstoff (high pressure laminate) ausgebildet werden soll, empfiehlt sich eine Harzaufnahme von bis zu 56% oder mehr. In der Regel wird bei CPL-Schichtstoffen (continuous pressure laminate) eine geringere Imprägnierbarkeit (z. B. Harzaufnahme bis 36 %) gewünscht. Die relativ freie Einstellbarkeit der Porosität in einer oder mehreren Lagen des erfindungsgemäß hergestellten Kernkartons eröffnet dabei neue Möglichkeiten bei der Fahrweise einer Imprägnieranlage hinsichtlich Durchsatz oder Qualität.

Dabei hat es sich als vorteilhaft gezeigt, wenn mindestens zwei Kernkartons zum Herstellen des Schichtstoffs aufeinander angeordnet, insbesondere gestapelt werden. Hierdurch können neben der Dicke auch die mechanischen Eigenschaften des Schichtstoffs optimal an den gewünschten Einsatzzweck angepasst werden. Beispielsweise können bis zu 50, 200, 250 oder mehr Kernkartons aufeinander gestapelt werden, um einen besonders robusten Schichtstoff herzustellen. Dabei können grundsätzlich gleich oder unterschiedlich ausgebildete Kernkartons verwendet werden. Wie bereits erwähnt kann jeder Kernkarton dabei seinerseits ein einlagiges oder mehrlagiges Schichtsystem aufweisen bzw. aus einer oder aus mehreren Schichten bestehen.

In einer weiteren vorteilhaften Ausgestaltung der Erfindung ist vorgesehen, dass wenigstens ein Kernkarton kaschiert wird, wobei insbesondere wenigstens eine Folie aus einem Kunststoff und/oder wenigstens ein vorzugsweise von mit einem Muster bedrucktes Dekorpapier und/oder wenigstens ein Trennpapier auf dem Kernkarton angeordnet wird. Hierdurch können insbesondere verschiedene Oberflächeneigenschaften des Schichtstoffs gezielt beeinflusst werden. Insbesondere können hierdurch Parameter wie Stoß-, Abrieb-, Scheuer- und Kratzfestigkeit, Lichtbeständigkeit, Beständigkeit gegen Chemikalien, Hitzebeständigkeit, Feuerbeständigkeit, Lebensmittelechtheit, Feuchtigkeitsbeständigkeit und optische Anmutung gezielt eingestellt werden.

In einer weiteren vorteilhaften Ausgestaltung der Erfindung ist vorgesehen, dass der wenigstens eine, mit dem Harz imprägnierte und/oder vorimprägnierte Kernkarton zum Herstellen des Schichtstoffs zumindest über den Schmelzpunkt des Harzes erwärmt, verpresst, zumindest unter den Schmelzpunkt des Harzes abgekühlt und gegebenenfalls weiterbearbeitet wird. Durch die Schritte Erwärmen, Verpressen und Abkühlen wird eine feste Verbindung der einzelnen Kernkarton-Lagen miteinander sichergestellt. Der daraus resultierende Schichtstoff kann dann bei Bedarf weiterbearbeitet, beispielsweise beklebt, verformt, zugeschnitten, gestanzt, gebohrt etc. werden.

Ein zweiter Aspekt der Erfindung betrifft einen Kernkarton zur Herstellung eines laminierten Schichtstoffs, wobei der Kernkarton ein Schichtsystem mit wenigstens einer Schicht aufweist und wobei das Schichtsystem zumindest anteilig aus wiederaufbereitetem Faserstoffgemisch besteht. Erfindungsgemäß ist dabei vorgesehen, dass das Schichtsystem einen Ascheanteil von höchstens 15 Gew.-% aufweist. Weiterhin ist erfindungsgemäß vorgesehen, dass die wenigstens eine Schicht des Schichtsystems zumindest einen Anteil eines wiederaufbereiteten Faserstoffgemischs umfasst, welches vor der Aufbereitung aus einer Gruppe ausgewählt wurde, die:
- einen Feinstoffanteil nach Brecht-Holl von höchsten 50 Gew.-%;
- einen Langfaserstoffanteil nach Brecht-Holl von mindestens 10 Gew.-%;
- einen Kurzfaseranteil nach Brecht-Holl von höchstens 60 Gew.-%; und
- einen Ascheanteil nach ISO 1762 von höchstens 20 Gew.-%;
aufweist und dass die wenigstens eine Schicht des Schichtsystems zumindest einen Anteil eines Additivs umfasst, welches ausgewählt ist aus einer Gruppe, die aus Retentionsmitteln und Nassverfestigern besteht. Der erfindungsgemäße Kernkarton, der in Abhängigkeit seines Flächengewichts auch als Kernpapier oder Kernpappe bezeichnet werden kann, besteht mit anderen Worten zumindest anteilig aus einem spezifisch ausgewählten, wiederaufbereiteten Faserstoffgemisch und weist einen geringen Ascheanteil von höchstens 15 Gew.-% im Schichtsystem auf. Hierdurch wird auf besonders einfache und zuverlässige Weise sichergestellt, dass der Kernkarton eine gute Imprägnierbarkeit besitzt, zumindest überwiegend aus wiederaufbereitetem Faserstoffgemisch hergestellt werden kann und eine geringe Abrasivität gegenüber Weiterverarbeitungswerkzeugen besitzt. Durch die Möglichkeit, den Kernkarton bezüglich seines Faserstoffgehalts mit einem hohen Anteil oder sogar vollständig aus dem wiederaufbereiteten Faserstoffgemisch herzustellen, besitzt der erfindungsgemäße Kernkarton zudem eine gute Luftdurchlässigkeit sowie eine verbesserte Kosten- und Umweltbilanz. Grundsätzlich kann vorgesehen sein, dass der Kernkarton neben einem Retentionsmittel und/oder einem Nassverfestiger weitere Additive enthält, um bestimmte Eigenschaften zu erzielen. Aufgrund der spezifischen Auswahl und Aufbereitung des wiederaufbereiteten Faserstoffgemischs kann jedoch prinzipiell auf die Verwendung weiterer Additive und insbesondere auf die Verwendung grenzflächenaktiver Verbindungen verzichtet werden, wodurch weitere Kosten- und Umweltvorteile erzielbar sind. Weitere sich ergebende Merkmale und deren Vorteile sind den Beschreibungen des ersten Erfindungsaspekts zu entnehmen. Vorteilhafte Ausgestaltungen des ersten Erfindungsaspekts sind dabei als vorteilhafte Ausgestaltungen des zweiten Erfindungsaspekts und umgekehrt anzusehen.

Der erfindungsgemäße Kernkarton kann besonders einfach, flexibel, umweltfreundlich und kostengünstig durch ein Verfahren nach einem der Ausführungsbeispiele des ersten Erfindungsaspekts erhalten werden bzw. erhalten sein. Die sich hieraus ergebenden Merkmale und deren Vorteile sind den Beschreibungen des ersten Erfindungsaspekts zu entnehmen.

Besonders einfach und kostengünstige lassen sich die oben genannten Eigenschaften einhalten, wenn als wiederaufbereitetes Faserstoffgemisch Altpapier, insbesondere krafthaltige Altpapiersorten der Hauptgruppe 4 und/oder OCC-Altpapier verwendet wird.

Dabei hat es sich in weiterer Ausgestaltung als vorteilhaft gezeigt, wenn das Schichtsystem einen Ascheanteil von höchstens 8 Gew.-% und vorzugsweise von höchstens 4 Gew.-% und/oder einen Anteil an Frischfasern von höchstens 20 Gew.-% und/oder einen Anteil an Altpapier von mindestens 80 %, insbesondere von mindestens 95 % aufweist. Unter einem Ascheanteil von höchstens 8 Gew.-% sind insbesondere Ascheanteile von 8,0 Gew.-%, 7,5 Gew.-%, 7,0 Gew.-%, 6,5 Gew.-%, 6,0 Gew.-%, 5,5 Gew.-%, 5,0 Gew.-%, 4,5 Gew.-%, 4,0 Gew.-%, 3,5 Gew.-%, 3,0 Gew.-%, 2,5 Gew.-%, 2,0 Gew.-%, 1,5 Gew.-%, 1,0 Gew.-%, 0,5 Gew.-% oder 0 Gew.-% sowie entsprechende Zwischenwerte wie beispielsweise 5,0 Gew.-%, 4,9 Gew.-%, 4,8 Gew.-%, 4,7 Gew.-%, 4,6 Gew.-%, 4,5 Gew.-%, 4,4 Gew.-%, 4,3 Gew.-%, 4,2 Gew.-%, 4,1 Gew.-% oder 4,0 Gew.-% usw. zu verstehen. Hierdurch besitzt der Kernkarton eine besonders niedrige Abrasivität gegenüber Trennwerkzeugen und erfüllt zudem besonders hohe Qualitätsansprüche hinsichtlich Luftdurchlässigkeit und Imprägnierbarkeit.

Durch einen Anteil an Frischfasern kann der Kernkarton grundsätzlich höhere Luftdurchlässigkeitswerte aufweisen. Hierzu kann der Kernkarton Frischfasern in einem Gewichtsanteil von 1,0 Gew.-%, 1,5 Gew.-%, 2,0 Gew.-%, 2,5 Gew.-%, 3,0 Gew.-%, 3,5 Gew.-%, 4,0 Gew.-%, 4,5 Gew.-%, 5,0 Gew.-%, 5,5 Gew.-%, 6,0 Gew.-%, 6,5 Gew.-%, 7,0 Gew.-%, 7,5 Gew.-%, 8,0 Gew.-%, 8,5 Gew.-%, 9,0 Gew.-%, 9,5 Gew.-%, 10,0 Gew.-%, 10,5 Gew.-%, 11,0 Gew.-%, 11,5 Gew.-%, 12,0 Gew.-%, 12,5 Gew.-%, 13,0 Gew.-%, 13,5 Gew.-%, 14,0 Gew.-%, 14,5 Gew.-%, 15,0 Gew.-%, 15,5 Gew.-%, 16,0 Gew.-%, 16,5 Gew.-%, 17,0 Gew.-%, 17,5 Gew.-%, 18,0 Gew.-%, 18,5 Gew.-%, 19,0 Gew.-%, 19,5 Gew.-% oder 20,0 Gew.-% und entsprechende Zwischenwerte aufweisen. Umgekehrt kann vorgesehen sein, dass das Schichtsystem zu mindestens 80 Gew.-% aus wiederaufbereitetem Faserstoffgemisch besteht. Unter einem Anteil von mindestens 80 % sind insbesondere Anteile von 80 %, 81 %, 82 %, 83 %, 84 %, 85 %, 86 %, 87 %, 88 %, 89 %, 90 %, 91 %, 92 %, 93 %, 94 %, 95 %, 96 %, 97 %, 98 %, 99 % oder 100 % sowie entsprechende Zwischenwerte wie beispielsweise 95,0 %, 95,1 %, 95,2 %, 95,3 %, 95,4 %, 95,5 %, 95,6 %, 95,7 %, 95,8 %, 95,9 % oder 96,0 % zu verstehen. Mit anderen Worten ist vorgesehen, dass der Faserstoffanteil des Kernkartons zumindest zu 80 % oder sogar vollständig aus wiederaufbereitetem Faserstoff, beispielsweise aus Altpapier besteht. Hierdurch werden eine besonders gute Umweltbilanz sowie erhebliche Kosteneinsparungen durch den Verzicht auf Frischfasern erreicht.

Dabei hat es sich als besonders vorteilhaft gezeigt, wenn das Schichtsystem des Kernkartons bzw. der gesamte Kernkarton frei von grenzflächenaktiven Substanzen ausgebildet ist. Hierdurch werden bei der Herstellung des Kernkartons insbesondere Nachteile im Hinblick auf Belastung des Wasserkreislaufsystems an der Papier- bzw. Kartonmaschine, Destabilisierung des chemischen Gleichgewichts des Maschinenkreislaufs, Erhöhung der Herstellungskosten pro Tonne Fertigprodukt und erhöhte Umwelt- und Abwasserbelastung vermieden.

Weitere Vorteile ergeben sich, wenn das Schichtsystem mindestens zwei, vorzugsweise drei und insbesondere vier Schichten aufweist. Hierdurch wird ein Optimum zwischen mechanischer Festigkeit und Verarbeitbarkeit des Kernkartons insbesondere im Hinblick auf Luftdurchlässigkeit und Imprägnierbarkeit erreicht.

In einer weiteren vorteilhaften Ausgestaltung der Erfindung ist vorgesehen, dass wenigstens eine äußere Schicht des Schichtsystems poröser als eine darunterliegende Schicht des Schichtsystems ausgebildet ist. Auf diese Weise kann das beim Imprägnieren verwendete Harz besonders schnell in das gesamte Schichtsystem des Kernkartons eindringen und den Kernkarton vollständig benetzen. Alternativ kann vorgesehen sein, dass wenigstens eine innere Schicht des Schichtsystems poröser als eine weiter außen liegende Schicht des Schichtsystems ausgebildet ist und/oder dass alle Schichten des Schichtsystems eine zumindest im Wesentlichen gleiche Porosität aufweisen. Die Porosität ist eine dimensionslose Messgröße und stellt das Verhältnis von Hohlraumvolumen zu Gesamtvolumen des Kernkartons dar. Unter einer zumindest im Wesentlichen gleichen Porosität sind dabei Abweichungen von ±10% zu verstehen.

Dabei hat es sich in weiterer Ausgestaltung der Erfindung als vorteilhaft gezeigt, wenn jede Schicht des Schichtsystems einen Ascheanteil von höchstens 15 Gew.-% und/oder einen Anteil an Frischfasern von höchstens 20 Gew.-% aufweist. Indem jede Schicht des Schichtsystems einen Ascheanteil von höchstens 15 Gew.-% aufweist, werden eine besonders geringe Abrasivität des Kernkartons und entsprechend hohe Kostenvorteile im Hinblick auf geringe Standzeiten und geringer Wartungsaufwand der zum Zuschneiden verwendeten Trennmaschinen erzielt. Ein Frischfaseranteil von höchstens 20 Gew.-% ermöglicht die Verwendung eines entsprechend hohen Altpapier-Anteils von mindestens 80 %, wodurch neben den entsprechenden Umweltvorteilen auch hohe Kostenvorteile realisiert werden.

Weiterhin wird die Verwendung eines mittels eines Verfahrens nach einem der Ausführungsbeispiele des ersten Erfindungsaspekts erhältlichen und/oder erhaltenen Kernkartons und/oder eines Kernkartons gemäß einem der Ausführungsbeispiele des zweiten Erfindungsaspekts zur Herstellung eines laminierten und/oder nicht-laminierten Schichtstoffs offenbart. Die sich hieraus ergebenden Merkmale und deren Vorteile sind den Beschreibungen des ersten und des zweiten Erfindungsaspekts zu entnehmen.

Es kann vorgesehen sein, dass mehrere Lagen des Kernkartons verwendet werden, um einen laminierten Schichtstoff herzustellen. Hierdurch können die Dicke sowie die mechanischen Eigenschaften des Schichtstoffs optimal eingestellt werden.

Es kann vorgesehen sein, dass ein Schichtstoff aus der Gruppe der HPL-Schichtstoffe, CPL-Schichtstoffe, Kompaktplatten, Overlays, Dekorpapiere, Dekorkartone, Dekorpappen, Folien, Vliesmaterialien, Vorimprägnate, Trägerplatten, Faserverbundwerkstoffe, Gegenzüge und Trägermaterialien hergestellt wird. Auf diese Weise kann ein Schichtstoff hergestellt werden, der sich flexibel beispielsweise für Küchen-, Büro- und Wohnmöbel, Bad, Innenausbau, Wandbekleidung, Laden- und Messebau, Fassaden, Fahrzeugbau und weiters im Bereich Dichtungsmaterial wie zum Beispiel Teerpappen, Bitumen und dergleichen einsetzen lässt.

Ein dritter Aspekt der Erfindung betrifft einen Schichtstoff, welcher wenigstens einen mittels eines Verfahrens gemäß einem Ausführungsbeispiel des ersten Erfindungsaspekts erhältlichen und/oder erhaltenen Kernkarton und/oder wenigstens einen Kernkarton gemäß einem Ausführungsbeispiel des zweiten Erfindungsaspekts umfasst. Die sich hieraus ergebenden Merkmale und deren Vorteile sind den Beschreibungen der vorhergehenden Erfindungsaspekte zu entnehmen. Vorteilhafte Ausgestaltungen des ersten und zweiten Erfindungsaspekts sind dabei als vorteilhafte Ausgestaltungen des dritten Erfindungsaspekts und umgekehrt anzusehen.

Dabei hat es sich als vorteilhaft gezeigt, wenn der Schichtstoff, der auch als Laminat oder dekorativer Schichtstoff bezeichnet werden kann, als HPL-Schichtstoff, CPL-Schichtstoff, Kompaktplatte, Overlay, Dekorpapier, Dekorkarton, Dekorpappe, Folie, Vliesmaterial, Vorimprägnat, Trägerplatte, Faserverbundwerkstoff, Gegenzug und/oder Trägermaterial, insbesondere für Harze und/oder harzähnliche Substanzen ausgebildet ist. Auf diese Weise kann der Schichtstoff besonders flexibel ausgestaltet und beispielsweise für Durchdringungsverbundwerkstoffe, Küchen-, Büro- und Wohnmöbel, Bäder, Innenausbau, Wandbekleidungen, Fußbodenbeläge, Laden- und Messebau, Fassaden, Fahrzeugbau, Kaschierungen, Trägerplatten von Holzwerkstoffen wie beispielsweise Sperrholz- oder Massivholzplatten, Spanplatten, Oriented Strandboard-Platten und Faserplatten hoher oder mittlerer Dichte, für mineralisch gebundene Holzwerkstoffe auf Kunststoffbasis, zur Herstellung von Faserverbundwerkstoffen wie beispielsweise von Naturfaserverstärkte Kunststoffe, Holz-Kunststoff-Komposite und Faser-Keramik-Verbundmaterialien und/oder als Gegenzug insbesondere als Regeneratpapier zur Beschichtung von Rückseiten bei Laminaten oder oberflächenbeschichteten Platten verwendet werden. Weitere grundsätzlich mögliche Anwendungsgebiete und Verwendungsarten des Schichtstoffs umfassen beispielhaft Fassaden und hinterlüftete Fassadensysteme wie etwa Balkone, Geländerverkleidungen, Brüstungen, Abgrenzungen, Sicht- und Windschutz, Vordächer, Geschäftsportale und Kabinenbau, Innenanwendungen wie beispielsweise Wände, Trennwände, Decken, Türen, Fußbodenbeläge, Treppen, Möbel, Stühle, Tische, Leisten, Fensterbänke, Arbeitsplatten, Theken, Waschtische und Nasszellenelemente sowie Außenanwendungen wie beispielsweise Balkone, Fassaden, Teilfassaden, Laibungen, Außenmöbel oder Schilder. Grundsätzlich kann der erfindungsgemäß hergestellte Kernkarton aber auch zur Herstellung weiterer Schichtstoffe verwendet werden, beispielsweise für Overlays, Dekorpapiere, Dekorkartone, Dekorpappen, Folien, Vliesmaterialien, Vorimprägnate, Trägerplatten, Faserverbundwerkstoffe, Gegenzüge und Trägermaterialien. Der Einsatz als Trägermaterial kann für andere Harze oder harzähnlichen Substanzen vorgesehen sein. Dies ist zum Beispiel beim Einsatz zur Herstellung von Teerpappen, Bitumen etc. der Fall.

In einer weiteren vorteilhaften Ausgestaltung der Erfindung ist vorgesehen, dass der Schichtstoff mindestens 2 Lagen des Kernkartons umfasst. Beispielsweise kann der Schichtstoff 2, 3, 4, 5, 6, 7, 8, 9, 10, 11, 12, 13, 14, 15, 16, 17, 18, 19, 20, 21, 22, 23, 24, 25, 26, 27, 28, 29, 30, 31, 32, 33, 34, 35, 36, 37, 38, 39, 40, 41, 42, 43, 44, 45, 46, 47, 48, 49, 50, 51, 52, 53, 54, 55, 56, 57, 58, 59, 60, 200, 250 oder mehr Lagen des Kernkartons umfassen, wobei für alle Lagen gleiche oder unterschiedliche Kernkartone verwendet werden können. Hierdurch können insbesondere die Dicke sowie die mechanischen Eigenschaften des Schichtstoffs optimal an seinen Einsatzzweck angepasst werden. Zusätzlich zu den Kernkarton-Lagen kann der Schichtstoff weitere Lagen, beispielsweise Dekor- und/oder Overlayfolien, Metallfolien oder - fasern(z. B. Aluminiumfolien), Faserstoffe, Fasergewebe, Kunststofffolien oder -fasern (z.B. Aramidfolien oder -fasern), keramische Materialien und dergleichen umfassen.

Ein vierter Aspekt der Erfindung betrifft eine Vorrichtung zum Durchführen eines Verfahrens gemäß einem Ausführungsbeispiel des ersten Erfindungsaspekts und/oder zur Herstellung eines Kernkartons gemäß einem Ausführungsbeispiel des zweiten Erfindungsaspekts, wobei die Vorrichtung zumindest wenigstens eine Einrichtung zum Herstellen einer Faserstoffsuspension umfasst, die zumindest anteilig aus einem wiederaufbereiteten Faserstoffgemisch besteht. Weiterhin umfasst die Vorrichtung wenigstens eine Aufbereitungseinrichtung, mittels welcher zumindest eine Entaschung der Faserstoffsuspension durchführbar ist, bis ein Ascheanteil der trockenen Fraktion der Faserstoffsuspension höchstens 15 Gew.-% beträgt, wenigstens eine Dosierungseinrichtung, mittels welcher wenigstens ein Additiv aus einer Gruppe, die aus Retentionsmitteln und Nassverfestigern besteht, zur Faserstoffsuspension zudosierbar ist, und wenigstens eine Kartonmaschine, mittels welcher zumindest das Schichtsystem des Kernkartons aus der wenigstens einen Faserstoffsuspension herstellbar ist. Die erfindungsgemäße Vorrichtung ermöglicht somit zumindest die Durchführung des erfindungsgemäßen Verfahrens bzw. die Herstellung des erfindungsgemäßen Kernkartons, wodurch die im Zusammenhang mit den vorhergehenden Erfindungsaspekten vorgestellten Merkmale und deren Vorteile erzielt werden können. Vorteilhafte Ausgestaltungen der vorhergehenden Erfindungsaspekte sind daher als vorteilhafte Ausgestaltungen des fünften Erfindungsaspekts und umgekehrt anzusehen.

Weitere Merkmale der Erfindung ergeben sich aus den Ansprüchen, den Ausführungsbeispielen sowie anhand der Zeichnungen. Die vorstehend in der Beschreibung genannten Merkmale und Merkmalskombinationen sowie die nachfolgend in den Ausführungsbeispielen genannten Merkmale und Merkmalskombinationen sind nicht nur in der jeweils angegebenen Kombination, sondern auch in anderen Kombinationen verwendbar, ohne den Rahmen der Erfindung zu verlassen. Dabei zeigt:
- Fig. 1: eine Prinzipdarstellung einer erfindungsgemäßen Vorrichtung zum Herstellen eines Kernkartons;
- Fig. 2: ein Ablaufschema der erfindungsgemäßen Weiterverarbeitung des Kernkartons zu einem laminierten Schichtstoff; und
- Fig. 3: eine schematische Perspektivansicht eines erfindungsgemäßen Schichtstoffs, der aus einem erfindungsgemäßen Kernkartons hergestellt ist.

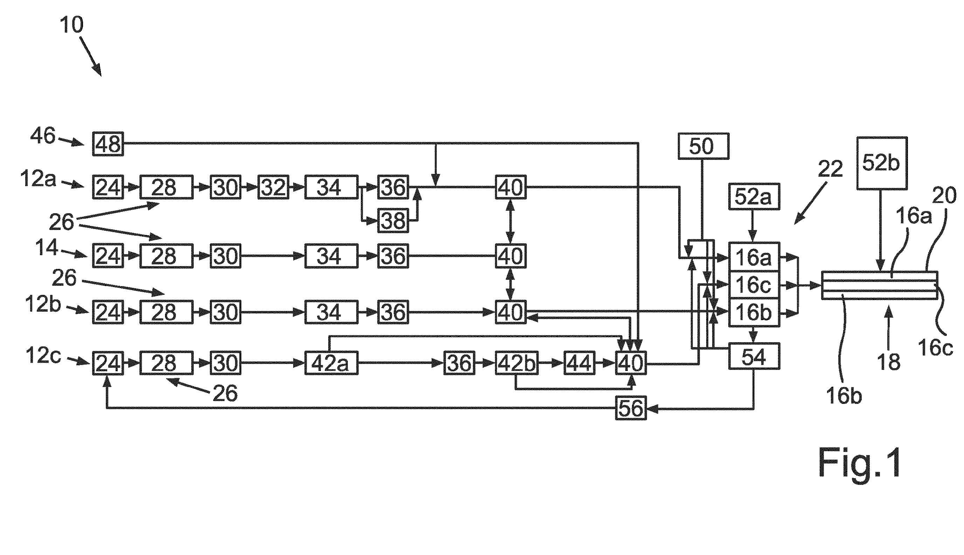

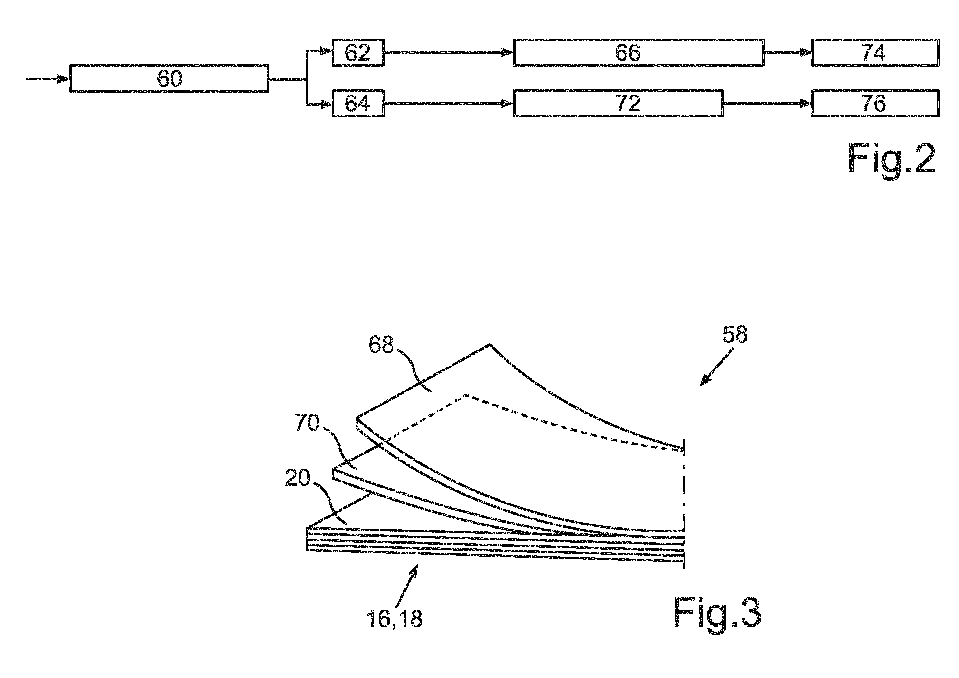

Fig. 1 zeigt eine Prinzipdarstellung einer erfindungsgemäßen Vorrichtung 10 zum Herstellen eines Kernkartons 20 (s. Fig. 3), der auch als "Core Board" bezeichnet werden kann. Ein Kernkarton 20 im Sinne der vorliegenden Erfindung kann dabei beispielsweise ein Flächengewicht zwischen etwa 20 g/m² und etwa 800 g/m² aufweisen und damit je nach Konvention grundsätzlich auch als Kernpapier oder Kempappe bezeichnet werden. Die Vorrichtung 10 umfasst im vorliegenden Ausführungsbeispiel drei Produktionslinien 12a-c sowie eine Reservelinie 14. Die Produktionslinien 12a-c dienen zum Herstellen und Aufbereiten einer entsprechenden Anzahl an Faserstoffsuspensionen und dienen zum Herstellen von drei Schichten 16a-c eines Schichtsystems 18 eines Kernkartons 20 auf einer Kartonmaschine 22. Im gezeigten Ausführungsbeispiel fungiert die Produktionslinie 12a als Linie zur Herstellung einer Deckschicht 16a, die Produktionslinie 12b als Linie zur Herstellung einer als Rückseite dienenden Schicht 16b und die Produktionslinie 12c als Linie zur Herstellung der Einlage bzw. Kern- oder Hauptschicht 16c des fertigen Kernkartons 20. Die Reservelinie 14 dient einerseits als Ersatzlinie, wenn eine der Produktionslinien 12a-c beispielsweise aufgrund von Wartungsarbeiten ausfällt, und kann darüber hinaus bei Bedarf zum Herstellen einer weiteren Schicht 16 (nicht gezeigt) des Schichtsystems 18 oder zum Beschicken äußerer Schichten 16a, 16b mit luftdurchlässigerem Faserstoff zur Erhöhung der Luftdurchlässigkeit des Kernkartons 20 verwendet werden. Die Produktionslinien 12a-c und die Reservelinie 14 umfassen jeweils eine Einrichtung 24 zum Herstellen einer wässrigen Faserstoffsuspension aus wiederaufbereitetem Faserstoffgemisch, beispielsweise aus krafthaltigem Altpapier. Die Einrichtung 24 kann beispielsweise ein Pulper sein. Das verwendete Faserstoffgemisch wird dabei ausgewählt aus einer Gruppe, die zumindest folgende Eigenschaften aufweist:
- der Feinstoffanteil nach Brecht-Holl beträgt höchsten 50 Gew.-%;
- der Langfaserstoffanteil nach Brecht-Holl beträgt mindestens 10 Gew.-%;
- der Kurzfaseranteil nach Brecht-Holl beträgt höchstens 60 Gew.-%; und
- der Ascheanteil nach Veraschung beträgt höchstens 20 Gew.-%.

Wichtig bei der Rohstoffauswahl ist der Einfluss der Rohstoffzusammensetzung auf die Luftdurchlässigkeit des fertigen Kernkartons 20. Die geforderten Eigenschaften können dabei besonders einfach eingehalten werden, wenn als Rohstoffe krafthaltige Altpapiersorten der Hauptgruppe 4 und/oder sogenannte "(american) old corrugated containers" ((A)OCC) verwendet werden. Die Zusammensetzung der Rohstoffe kann beispielsweise mit Hilfe einer Laborfraktionierung (Brecht-Holl-Fraktionator) ermittelt werden, um die prozentuale Verteilung der Einzelfraktionen Langfaser, Kurzfaser, Feinstoffe und gegebenenfalls Grobschmutz bzw. Splitter zu definieren (z. B. Brecht Holl: Nr.: 16...50 Maschenweite/cm, gemäß DIN). Die genaue Prüfanweisung kann beispielsweise dem Zellcheming Merkblatt VI/1/66 entnommen werden. Die Aschebestimmung sowohl der Rohstoffe als auch des fertigen Kernkartons 20 kann nach ISO 1762 erfolgen. Zur Ermittlung der Aschekonzentration nach ISO 1762 wird eine Suspension aus dem zu vermessenden Rohstoff und Wasser hergestellt. Nach einer Bestimmung der Stoffkonzentration (in Gew.-%) wird das Fasermaterial gewogen, in einen Tiegel gegeben und dann in einem Muffeloffen bei 575 °C erhitzt. Nach 2 Stunden ermittelt man die Auswaage für die Bewertung des Aschegehalts prozentual zur Einwaage. Zum Ermitteln der Aschekonzentration im fertigen Kernkarton 20 wird die Kartonprobe im Ofen zunächst bei 100°C getrocknet, dann eingewogen und anschließend in einem Tiegel im Muffeloffen bei 575 °C erhitzt. Die Aschebestimmung erfolgt prozentual zur Einwaage des Rohstoffs.

Um den Ascheanteil der trockenen Fraktion der einzelnen Faserstoffsuspension auf einen Wert von höchstens 15 Gew.-% und vorzugsweise auf Werte unter 4 Gew.-% einzustellen, umfassen die Produktionslinien 12a-c und die Reservelinie 14 entsprechende Aufbereitungseinrichtungen 26, mittels welchen die einzelnen Faserstoffsuspension gereinigt und entascht werden. Die einzelnen Aufbereitungseinrichtungen 26 der Produktionslinien 12a-c und der Reservelinie 14 können dabei gleich oder unterschiedlich ausgebildet sein, um ein Schichtsystem 18 mit gleichen oder unterschiedlichen Schichten 16 herstellen zu können. Im gezeigten Ausführungsbeispiel umfasst jede Aufbereitungseinrichtung 26 eine Grobschmutzsortierungseinrichtung, die beispielsweise aus zentrifugal arbeitenden Sortierern 28, beispielsweise Drucksortierern bestehen. Die Sortierer 28 umfassen einem Sortierkorb als ein feststehendes Element und einen Rotor, beispielsweise einen Flügelrotor, der Überdruck und Unterdruck erzeugt und somit die Korbfläche frei hält und Fremdstoffe wie Kunststoff, Glas und Metall als Rejekt aus der Faserstoffsuspension ausschleust. Dabei erfolgt bereits auch eine gewisse Entaschung und Feinstoffreinigung der Faserstoffsuspensionen. Anschließend werden die grobgereinigten Faserstoffsuspensionen in Cleaneranlagen 30 der Aufbereitungseinrichtung 26 weitergeleitet. Die Cleaneranlagen 30 trennen schwerere und abrasive Teilchen wie Sand und Glas ab, die ein höheres spezifisches Gewicht als Zellulosefaser aufweisen. Das gleiche gilt auch für Aschekomponenten. Diese Teilchen werden zusammen mit dem Faserstoff bei hoher Wasserverdünnung (beispielsweise 2% Stoffdichte) mittels Zentrifugalbeschleunigung gegen konische Wände der Cleaneranlagen 30 gedrückt und über die Schwerkraft am unteren Ende der Cleaneranlagen 30 über den Rejekt ausgeschleust. Die Cleaneranlagen 30 umfassen im gezeigten Ausführungsbeispiel 3 bis 4 Stufen, um einen maximalen Wirkungsgrad zu erzielen. Die Produktionslinie 12a umfasst im Unterschied zu den anderen Produktionslinien 12b, 12c zusätzlich eine De-inking-Flotationseinrichtung 32, mittels welcher hier Asche und Feinstoffe zusammen mit etwaigen Druckfarben durch Anlagerungen an Luftblasen zur Oberfläche flotiert und mit dem Druckfarbenschlamm aus der Faserstoffsuspension ausgetragen werden. Die Flotationseinrichtung 32 kann dabei in Strömungsrichtung betrachtet stromauf und/oder stromab des Cleaners 30 angeordnet sein.

Alternativ oder zusätzlich kann vorgesehen sein, dass wenigstens eine der Aufbereitungseinrichtungen 26 die Zudosierung wenigstens einer Säure und/oder wenigstens einer Base und/oder die Einleitung von CO₂ ermöglicht. Unter einer Säure wird im Rahmen der vorliegenden Erfindung eine Verbindung verstanden, die eine Absenkung des pH-Werts des wässrigen Systems bewirkt. Dementsprechend wird unter einer Base eine Verbindung verstanden, die eine Erhöhung des pH-Werts des wässrigen Systems bewirkt. Beispielsweise kann vorgesehen sein, dass mit Hilfe wenigstens einer der Aufbereitungseinrichtungen 26 CO₂ bzw. Kohlensäure und/oder Natronlauge in das wässrige System eingebracht werden kann. Hierdurch kann unter anderem der pH-Wert des wässrigen Systems auf einen gewünschten Wert eingestellt oder sogar in einem gewünschten Bereich gepuffert werden. Ebenso kann auf diese Weise die Wasserhärte des wässrigen Systems beeinflusst werden.

Insbesondere das Einbringen bzw. Einleiten von CO₂ ermöglicht dabei eine besonders einfache Steuerung des Asche- und/oder Feststoffgehalts der Faserstoffsuspension bzw. des späteren Kernkartons 20, da vor allem Calcium- und Magnesium-haltige Vergindungen in Abhängigkeit des eingestellten pH-Werts als Carbonate bzw. Hydrogencarbonate wahlweise in Lösung gebracht und/oder ausgefällt werden können.

In den Produktionslinien 12a, 12b und in der Reservelinie 14 gelangt die Faserstoffsuspension anschließend in eine Feinschmutzsortierungseinrichtung 34, in welcher eine Feinschmutzsortierung und Dispergierung (Homogenisierung) erfolgt. Hierbei werden neben Asche und Feinstoffen auch Fremdstoffe wie Sand, Styropor, Klebstoffe sowie kleine Metallteile aus dem Faserstoffsystem ausgeschleust. Anschließend erfolgt in den Eindickern 36 eine Eindickung der Faserstoffsuspensionen. In der Produktionslinie 12a kann zusätzlich zumindest ein Teil der Faserstoffsuspension mit Hilfe einer Variospliteinrichtung 38 behandelt werden. Die Faserstoffsuspension wird in der Variospliteinrichtung 38 zwischen eine rotierende Walze und eine rotierendes Sieb eingespritzt. Das rotierende Sieb presst dabei die Faserstoffsuspension gegen die rotierende Walze. Dadurch werden viel Wasser und damit auch Asche und Feinstoffe aus der Faserstoffsuspension ausgetragen.

Anschließend werden die entaschten Faserstoffsuspensionen der Produktionslinien 12a, 12b und der Reservelinie 14 in grundsätzlich optionale Vorratsbütten 40 transportiert. Dabei kann grundsätzlich vorgesehen sein, dass die Vorratsbütten 40 fluidisch miteinander gekoppelt sind, um einen Stoffaustausch zu ermöglichen. Alternativ können fluidisch voneinander getrennte Vorratsbütten 40 oder eine gemeinsame Vorratsbütte 40 verwendet werden.

Anschließend können die Faserstoffsuspensionen der Produktionslinien 12a, 12b zur Kartonmaschine 22 transportiert werden, um über entsprechende Siebe auf der Siebpartie der Kartonmaschine 22 die Schichten oder Lagen 16a, 16b herzustellen.

Bei der Produktionslinie 12c erfolgt stromab des Cleaners 30 eine Doppelfraktionierung der Faserstoffsuspension, das heißt eine Trennung von Kurz- und Langfasern. Die Langfasern sind für das vorliegende Herstellungsverfahren sehr wertvoll für die Herstellung von Schichten 16 mit hoher Porosität. Bei herkömmlichen Sortierverfahren werden die Langfaser normalerweise als Rejekt anerkannt und aussortiert. Die Besonderheit des vorliegenden Verfahrens liegt darin, dass die Langfasern vom Rejekt eines ersten Fraktionierers 42a zurückgewonnen und nicht aus dem Stoffsystem ausgeschleust werden. Der abgetrennte kurzfaserreiche Strom der Faserstoffsuspension wird zur Vorratsbütte 40 weitertransportiert und kontrolliert mit der langfaserreichen Fraktion vermischt. Die abgetrennte langfaserreiche Fraktion wird eingedickt (Eindicker 36) und in einem zweiten, grundsätzlich optionalen Fraktionierer 42b einer Langfasersortierung unterworfen. Der erneut abgetrennte kurzfaserreiche Strom der Faserstoffsuspension wird ebenfalls zur Vorratsbütte 40 weitertransportiert. Die besonders langfaserreiche Fraktion wird in einem Disperger 44 dispergiert. Dabei kann vorgesehen sein, dass die langfaserreiche Fraktion stromauf des Dispergers 44 mit Wasserdampf beaufschlagt wird, um die Langfasern während des Dispergierens geschmeidig und bruchresistenter zu machen. Die Geschmeidigkeit und Bruchresistenz der Langfaser bei der Dispergierung vermindern die Erzeugung von Kurzfasern und von Feinstoffen sehr stark, deren Einfluss auf die Luftdurchlässigkeit und auf die Imprägnierbarkeit negativ ist.

Der Langfaseranteil wird somit äußerst schonend behandelt, um jegliche Beschädigung und Verkürzen der Langfaser zu vermeiden. Für diesen Zweck können auch optimierte Disperger 44 eingesetzt werden. Die Disperger 44 zeichnen sich durch den spezifischen Abstand der Zahnkränze zu einander und den eingestellten Spalt zwischen den Dispergergarnituren aus. Je größer der Abstand der Zahnkränze und der Zähne auf der Dispergergarnitur zueinander und je größer der Spalt zwischen den Dispergerscheiben ist, desto schonender erfolgt die Stoffdispergierung. Das heißt eine Homogenisierung des Faserstoffgemischs findet mit einer minimalen Verkürzung der Faserlänge statt. Je höher die Faserlänge des Faserstoffes, und je höher der Langfaseranteils im Gesamtstoff ist, desto höher die Porosität der hergestellten Schicht 16. Dies wirkt sich positiv auf die Luftdurchlässigkeit und damit auf die Imprägnierbarkeit des Kernkartons 20 aus. Weitere positive Prozessparameter zum Erhalt der Langfasern sind eine hohe Verdünnung, eine optimale Anpassung der Rotordrehzahlen und die Anpassung der Differenzdrücke zwischen Einlauf und Auslauf der Fraktionierer 42.

Zur Einstellung der Porosität und Luftdurchlässigkeit ist weiterhin eine Frischfaserlinie 46 vorgesehen, welche einen Pulper 48 mit Frischfasern umfasst. Die Frischfasern können im gezeigten Ausführungsbeispiel wahlweise zu den Faserstoffsuspensionen der Produktionslinien 12a-c zugemischt werden, wobei der Frischfaseranteil bezogen auf den Gesamtfaseranteil der einzelnen Faserstoffsuspensionen grundsätzlich maximal 20 Gew.-% beträgt. Die Zugabe von Frischfasern erfolgt dabei bevorzugt nach der Aufreinigung bzw. Entaschung der Faserstoffsuspensionen, um eine Beschädigung und Verkürzung der Frischfasern zu vermeiden. Der grundsätzliche Vorteil von Frischfasern besteht in ihrer Aschefreiheit und ihrem vergleichsweise hohen Anteil an Langfasern.

Vor einer Siebpartie bzw. im konstanten Teil der Kartonmaschine 22 ist eine Dosierungseinrichtung 50 angeordnet, mittels welcher wenigstens ein Additiv aus einer Gruppe, die aus Retentionsmitteln und Nassverfestigern besteht, zur den einzelnen Faserstoffsuspensionen zudosiert wird. Als Retentionsmittel zur Steuerung der Entwässerung bei der Blattbildung werden den Faserstoffsuspensionen im vorliegenden Ausführungsbeispiel 0,3% bis 0,8% Polyethylenimin zugegeben. Der Einsatz eines Nassfestmittels ist insbesondere für die Weiterverarbeitung des Kernkartons 20 von Bedeutung, da als Verarbeitungsschritt nach der Herstellung des Kernkartons 20 eine Imprägnierung mit Harz oder einer ähnlichen Substanz erfolgt. Der Kernkarton 20 wird hierbei durch einen Tauchtrog oder dergleichen mit einem flüssigen Kunstharz auf Basis von Phenolformaldehyd (oder Melaminformaldehyd oder eine Mischung aus beiden oder einer harzähnlichen Substanz) geführt. Wichtig für eine abrissfreie Imprägnierung und Weiterverarbeitung des Kernkartons 20 ist eine ausreichende Nassreißfestigkeit. Im vorliegenden Ausführungsbeispiel wird diese Nassreißfestigkeit mit dem Zusatz von maximal 2 Gew.-% eines Nassfestmittels auf Basis von Polyamidoamin-Epichlorhydrin sichergestellt. Grundsätzlich kann jedoch auch vorgesehen sein, dass der Kernkarton 20 frei von Nassfestmitteln ausgebildet wird. Je höher die Luftdurchlässigkeit des Kernkartons 20 ist, desto höher ist die mögliche Harzaufnahme. Je höher die Harzaufnahme ist, desto höher sind aber auch die Forderungen nach einem stabilen bzw. nassreißfesten Kernkarton 20. Es ist zu betonen, dass keine Zugabe grenzflächenaktiver Verbindungen als Additiv erfolgt. Hierdurch werden eine Belastung des Wasserkreislaufsystems der Vorrichtung 10, eine Destabilisierung des chemischen Gleichgewichts des Maschinenkreislaufs, eine Erhöhung der Herstellungskosten sowie unnötige Umwelt- und Abwasserbelastungen vermieden. Grundsätzlich kann es allerdings vorgesehen sein, dass bei der Herstellung des Kernkartons 20 bzw. der Faserstoffsuspension(en) neben Retentionsmitteln und/oder Nassverfestigern weitere Additive verwendet werden, um den Produktionsprozess und die Eigenschaften und Verarbeitbarkeit des Kernkartons 20 in der gewünschten Weise zu beeinflussen und/oder um einem aus dem Kernkarton 20 hergestellten Schichtstoff 58 bestimmte Eigenschaften zu verleihen. Als weitere Additive können dabei grundsätzlich Biopolymere, beispielsweise Hemicellulose, Cellulose, Lignin und/oder Polyosen, und/oder Polysaccharide, beipielsweise Stärke, Stärkepolymere, Alginate, Chitine, Hemicellulose, Cellulosederivate, Celluloseester, Celluloseacetat, Cellulosetriacetat, Cellulosenitrat, Celluloseether, Ethylcellulose, Methylcellulose, Oxyethylcellulose, Oxypropylcellulose und Carboxymethylcellulose verwendet werden. Weitere grundsätzlich verwendbare Additive umfassen Harze wie etwa Phenolformaldehydharze, Melaminformaldehydharze, Mischungen aus Phenolformaldehydharzen und Melaminformaldehydharzen, neutrale oder anionische Polymere, Polyvinylalkohol, Polyacrylamid, anionische oder kationische Polyelektrolyte wie beispielsweise Acrylsäure, Carboxymethylcellulose, anionische oder kationische Stärke, Polydiallyldiamoniumchlorid (PolyDADMAC)) oder Polyvinylamin, natürliche Trockenfestmittel wie beispielsweise Galactomannan oder Alginate, synthetische Trockenfestmittel wie beispielsweise Polyamine, Polyamide, Polyalkohole, Polyacrylamide, Polyvinylalkohol, Polyvinyl(alkohol-acetat), Polyimine oder Polyethylenimin (PEI), vernetzende oder physikalische Nassfestmittel wie beispielsweise Glyoxal, Glutardialdehyd (1,5-Pentandialdehyd), Aldehydstärke, Polyamidoamin-Epichlorhydrin (PAAE), MelaminFormaldehyd (MF) oder Harnstoff-Formaldehyd (HF), basische, saure und/oder substantive Farbstoffe (Direktfarbstoffe), Flammschutzmittel wie beispielsweise halogenierte Flammschutzmittel, Organophosphor-Flammschutzmittel oder anorganische Flammschutzmittel wie etwa Aluminiumhydroxid, Magnesiumhydroxid, Ammoniumsulfat, Antimontrioxid oder Antimonpentoxid. Schließlich können auch Additive aus den Gruppen, Fixiermittel, Aluminiumsalze, Flammhemmungsmittel, Entschäumer, Entlüfter, Ligninderivate, Ligninsulfonate, Biozide und/oder Fungizide verwendet werden. Die Additive können dabei grundsätzlich ein- oder mehrmals an der gleichen Stelle und/oder an unterschiedlichen Stellen des Herstellungsprozesses zugegeben werden.

Eine erste Qualitätskontrolle 52a kann während der Blattbildung auf der Kartonmaschine 22 durchgeführt werden. Hierzu wird beispielsweise der Mahlgrad des Schichtsystems 18 (in Grad Schopper-Riegler, °SR) ermittelt.

Im vorliegenden Herstellungsverfahren für den Kernkarton 20 sind aufgrund der Maschineneigenschaften mehrere Fahrweisen möglich. Es ist sowohl eine einlagige als auch eine mehrlagige Blattbildung möglich, da die verwendete Kartonmaschine 22 mit mehreren Langsieben, einem Hybridformer und einer Obersiebentwässerung auf der Hauptlage ausgestattet ist (nicht gezeigt). In Abhängigkeit der Ausgestaltung der Kartonmaschine 22 können unterschiedlich viele Lagen gleichzeitig hergestellt werden. Jede Lage oder Schicht 16 an der Kartonmaschine 22 kann mit der gleichen oder mit einer individuellen Stoffzusammensetzung aus krafthaltigem Altpapier aus den einzelnen Produktionslinien 12a-c bzw. der Reservelinie 14 versorgt werden. Im vorliegenden Ausführungsbeispiel werden die Außenlagen 16a, 16b poröser als die Innenlage bzw. Kernschicht 16c ausgebildet, um eine besonders gute Imprägnierbarkeit und Harzaufnahmefähigkeit des Kernkartons 20 zu ermöglichen. Grundsätzlich können jedoch umgekehrt innere Schichten (Kernschicht 16c) poröser als die weiter außen liegende Schichten (Außenschichten 16a, 16b) ausgebildet werden. Weiterhin können alle Schichten 16a-c grundsätzlich auch die gleiche Porosität aufweisen, wobei die Porosität nach Wunsch entsprechend höher oder geringer eingestellt werden kann.

Das bei der Herstellung des Kernkartons 20 in der Kartonmaschine 22 anfallende Prozesswasser wird in einem Siebwasserbehälter 54 aufgefangen und mittels einer Mikroflotationseinrichtung 56 (Druckentspannungsflotation) gereinigt und entascht werden. Die Abtrennung beruht auf der Anlagerung von Feinstoffen und Ascheteilchen an Luftblasen. Der Schaum an der Oberfläche wird dann abgeschöpft und aus dem Wasserkreislauf ausgetragen. Das gereinigte Prozesswasser wird zurückgeführt und zur Herstellung der Faserstoffsuspensionen verwendet.

Der Kernkarton 20, der im gezeigten Ausführungsbeispiel ausschließlich aus dem dreilagigen Schichtsystem 18 besteht, kann anschließend getrocknet und/oder für Lagerung oder Transport mit einem Tambour aufgerollt werden. Weiterhin kann eine zweite Qualitätskontrolle 52b durchgeführt werden, indem wenigstens ein Parameter aus der Gruppe Flächengewicht, Feuchtigkeitsgehalt, Dichte, Reißlänge trocken, Reißlänge feucht, Luftdurchlässigkeit, Ascheanteil, Imprägnierbarkeit und Porosität des hergestellten Kernkartons 20 ermittelt wird.

Die Imprägnierbarkeit des Kernkartons 20 kann besonders einfach durch eine Ultraschallmessung ermittelt werden. Das Messprinzip beruht dabei auf der Änderung der Ausbreitung von Ultraschallimpulsen während der Kernkarton 20 in ein flüssiges Medium eingebracht wird und sich mit dem Medium durchtränkt. Zur Ultraschallmessung kann beispielsweise ein Messgerät verwendet werden, welches eine Messzelle mit einem Ultraschallsender und einem Ultraschallempfänger aufweist, wobei die Messzelle mit einer Flüssigkeit befüllt werden kann. Die Flüssigkeit übt eine konstante Dämpfung auf die Ultraschallwellen aus. Ändert sich der Flüssigkeitsstand in der Messzelle, so ändert sich auch die Ultraschallintensität. Diese Intensitätsänderung kann beispielsweise im Millisekundentakt während der Messung erfasst und in Form einer Messkurve dargestellt werden. Je nach Porosität bzw. Luftdurchlässigkeit des Kernkartons 20 erfährt der Ultraschall beim Eintauchen der Kernkartonprobe in die mit Flüssigkeit gefüllte Messzelle eine unterschiedlich starke Dämpfung.

Die beschriebene Stoffaufbereitung mit mehreren Produktionslinien 12a-c und den oben beschriebenen Aufbereitungsschritten, kombiniert der Möglichkeit einer mehrlagigen Blatt- bzw. Schichtbildung an der Kartonmaschine 22, ermöglichen eine gezielte qualitätsorientierte Produktgestaltung. Aufgrund des geringen Ascheanteils von 8 % oder weniger ermöglicht der Kernkarton 20 längere Betriebszeiten und geringeren Wartungsaufwand für zur Weiterverarbeitung verwendete Trennmaschinen. Die hohe Luftdurchlässigkeit des Kernkartons 20 hat direkten Einfluss auf die Harzimprägnierung bzw. auf die sogenannte Penetration des Harzes in den Kernkarton 20. Je höher die Harzaufnahme ist, desto homogener lassen sich Vorimprägnate zu Schichtstoffen 58 (s. Fig. 3) verpressen.

Fig. 2 zeigt ein Ablaufschema der erfindungsgemäßen Weiterverarbeitung des Kernkartons 20 zu einem laminierten Schichtstoff 58. In einer Imprägnieranlage 60 wird der Kernkarton 20 gegebenenfalls abgerollt, mit einem Harz und/oder einer harzähnlichen Substanz imprägniert, getrocknet und gegebenenfalls gekühlt. Als Harz kann beispielsweise ein Phenolharz, ein Melaminharz oder Mischungen hieraus verwendet werden. Alternativ oder zusätzlich können jedoch auch andere Harze und/oder synthetische Harze vorgesehen sein. Bei der Trocknung erfolgt eine Polykondensation unter Vernetzung der Harzmoleküle mit dem Zellstoff des Kernkartons 20 unter Abspaltung von Wassermolekülen.

Grundsätzlich ist dabei eine möglichst hohe Imprägnierbarkeit des Kernkartons 20 erwünscht. Wird der Kernkarton 20 beispielsweise zu einem HPL-Schichtstoff 58 (high pressure laminate) weiterverarbeitet, ist eine Harzaufnahme von bis zu 56 % oder mehr erwünscht. Dafür wird die Porosität der Faserstoffsuspensionen für die äußeren Schichten 16a, 16b oder für alle Schichten 16a-c bei der Blattbildung auf der Kartonmaschine 22 erhöht (niedriger Mahlgrad, ca. 8-25°SR). Dies ermöglicht bei der Verarbeitung auf der Imprägnieranlage 60 ein schnelleres Eindringen des Kunstharzes in die innere Schicht 16c sowie eine vollständige Benetzung des Kernkartons 20. Ist nur eine geringere Imprägnierbarkeit (z. B. Harzaufnahme bis 36 Gew.-%) erwünscht, wie dies beispielsweise bei CPL-Schichtstoffen 58 (continuous pressure laminate) häufig der Fall ist, werden die äußeren Schichten 16a, 16b oder alle Schichten 16a-c weniger porös ausgebildet, um die Harzbenetzung und -eindringung entsprechend zu steuern. Die einfache Steuerung der Porosität des Kernkartons 20 ermöglicht somit völlig neue Möglichkeiten bei der Fahrweise der Imprägnieranlage 60 hinsichtlich Qualität, Durchsatz, Ausgestaltungsvarianten und dergleichen.

Der imprägnierte Kernkarton 20 (Vorimprägnat) kann anschließend entweder zu einer CPL-Pressmaschine 62, zu einer HPL-Pressmaschine 64 oder zu einer sonstigen Schichtstoffherstellungsmaschine transportiert werden. In Abhängigkeit der Weiterverarbeitung kann der Kernkarton 20 hierzu aufgerollt, zugeschnitten, gestapelt etc. werden.

Auf der CPL-Pressmaschine 62 erfolgt im Verfahrens schritt 66 ein kontinuierlicher Pressvorgang mit den Schritten Abrollen einer oder mehrerer Rollen Kernkarton 20. Beispielsweise kann der Schichtstoff 58 aus bis zu 6 Lagen oder mehr des Kernkartons 20 hergestellt werden. Anschließend erfolgt eine Harzverflüssigung durch Erwärmen, eine kontinuierliche Verpressung und eine Abkühlung des Schichtstoffs 58. Gegebenenfalls kann der Schichtstoff 58 abgeschliffen, zugeschnitten oder anderweitig bearbeitet werden. Der CPL-Schichtstoff 58 kann beispielsweise eine Dicke von 0,6 mm bis 1,2 mm aufweisen. Es sind jedoch auch andere Dicken möglich. Weiterhin kann der CPL-Schichtstoff 58 mit oder ohne Overlayfolie 68 (s. Fig. 3) aus einem Kunststoffmaterial zur Steigerung der Stoß-, Abrieb-, Scheuer- und Kratzfestigkeit, Lichtbeständigkeit, Beständigkeit gegen Chemikalien, Hitzebeständigkeit, Feuerbeständigkeit, Lebensmittelechtheit, Feuchtigkeitsbeständigkeit, optische Anmutung, Farbechtheit etc. versehen werden. Ebenso kann der Schichtstoff 58 (Imprägnat) mit einem Dekorpapier 70 versehen werden, das seinerseits mit einem Muster bedruckt, unbedruckt, einheitlich gefärbt oder vorimprägniert sein kann. Ebenso kann der Schichtstoff 58 mit vorimprägnierten Trennpapieren, Metallfolien, Kunststofffolien, Fasermaterialien, Geweben etc. (1, 2 oder mehr Lagen) versehen werden.

Auf der HPL-Pressmaschine 64 erfolgt im Verfahrensschritt 72 ein diskontinuierlicher Pressvorgang. Auch hier kann der Schichtstoff 58 mit oder ohne Overlayfolie 68 (Steigerung der Scheuer- und Kratzfestigkeit, Farbechtheit etc.) hergestellt werden. Der Schichtstoff 58 kann beispielsweise als HPL-Schichtstoffplatte mit einer Dicke zwischen 6 mm und 8 mm hergestellt werden. Hierzu können beispielsweise 30 Lagen des Kernkartons 20 verwendet werden. Für andere Dicken der HPL-Platte sind entsprechend mehr oder weniger Lagen des imprägnierten Kernkartons 20 erforderlich. HPL-Platten können aber grundsätzlich mit nahezu beliebig vielen Lagen des Kernkartons 20 hergestellt werden. Für ein sogenanntes Dünnlaminat können beispielsweise 2-3 Lagen des Kernkartons 20 verwendet werden. Für dickere Schichtstoffe können beispielsweise 30-60 Lagen oder mit 100-250 Lagen des Kernkartons 20 verwendet werden. Die Anzahl der Lagen ist unter anderem auch von der Grammatur bzw. Dicke des Kernkartons 20 abhängig. Beispielsweise kann der erfindungsgemäße Kernkarton 20 eine Grammatur von 215 +/- 4 gsm (grams per square meter, g/m²) aufweisen. Zur Reduzierung der Anzahl an Lagen kann jedoch auch ein Kernkarton 20 mit einer höheren Grammatur, beispielsweise 250 gsm oder mehr hergestellt und verwendet werden.

Weiterhin kann der HPL-Schichtstoff 58 mit oder ohne Overlayfolie 68 (s. Fig. 3) aus Kunststoffmaterial zur Steigerung der Scheuer- und Kratzfestigkeit, Farbechtheit etc. versehen werden. Ebenso kann der Schichtstoff 58 (Imprägnat) mit einem Dekorpapier 70 versehen werden, das seinerseits mit einem Muster bedruckt, unbedruckt oder einheitlich gefärbt sein kann. Ebenso kann der Schichtstoff 58 mit Trennpapieren (1, 2 oder mehr Lagen) versehen werden.

Der CPL- oder HPL-Schichtstoff 58 kann anschließend mit entsprechenden Verarbeitungseinrichtungen 74 bzw. 76 weiterverarbeitet werden. Beispielsweise kann mittels der Verarbeitungseinrichtungen 74 eine Verleimung der Rückseite, eine Verklebung auf eine MDF-Platte oder eine Kaschierung von Flächen, beispielsweise für Küchenfassaden etc., erfolgen. Mittels der Verarbeitungseinrichtungen 76 wird der HPL-Schichtstoff 58 beispielsweise gestanzt, gesägt, geschnitten, gebohrt oder mit anderen Bauteilen verbunden. Der HPL-Schichtstoff 58 kann beispielsweise als Trennwand, Raumverkleidung, Arbeitsplatte oder dergleichen verwendet werden.

Fig. 3 zeigt eine schematische Perspektivansicht eines Ausführungsbeispiels des erfindungsgemäßen Schichtstoffs 58, der aus einer Lage des erfindungsgemäßen Kernkartons 20 hergestellt ist. Der Kernkarton 20 weist dabei seinerseits ein Schichtsystem 18 mit vier Schichten 16 auf. Der Schichtstoff 58 weist weiterhin eine transparente Overlayfolie 68 sowie ein Dekorpapier 70 auf und kann daher auch als Dekorative Schichtpressstoffplatte (DKS) bezeichnet werden.

Die in den Unterlagen angegebenen Parameterwerte zur Definition von Prozess- und Messbedingungen für die Charakterisierung von spezifischen Eigenschaften des Erfindungsgegenstands sind auch im Rahmen von Abweichungen - beispielsweise aufgrund von Messfehlern, Systemfehlern, Einwaagefehlern, DIN-Toleranzen und dergleichen - als vom Rahmen der Erfindung mitumfasst anzusehen.

## Patentansprüche

1. Verfahren zum Herstellen eines Kernkartons (20) für einen Schichtstoff (58), wobei der Kernkarton (20) ein Schichtsystem (18) mit wenigstens einer Schicht (16a-c) aufweist, **dadurch gekennzeichnet, dass** das Verfahren zumindest folgende Schritte umfasst:
a) Bereitstellen eines wiederaufbereiteten Faserstoffgemischs, welches zumindest folgende Eigenschaften aufweist:
- der Feinstoffanteil nach Brecht-Holl beträgt höchsten 50 Gew.-%;
- der Langfaserstoffanteil nach Brecht-Holl beträgt mindestens 10 Gew.-%;
- der Kurzfaseranteil nach Brecht-Holl beträgt höchstens 60 Gew.-%; und
- der Ascheanteil nach ISO 1762 beträgt höchstens 20 Gew.-%,
b) Herstellen wenigstens einer Faserstoffsuspension, welche zumindest einen Anteil des bereitgestellten Faserstoffgemischs enthält;
c) Aufbereiten der wenigstens einen Faserstoffsuspension, indem zumindest eine Entaschung der Faserstoffsuspension durchgeführt wird, bis ein Ascheanteil der trockenen Fraktion der Faserstoffsuspension höchstens 15 Gew.-% beträgt, und indem wenigstens ein Additiv zur wenigstens einen Faserstoffsuspension zugegeben wird, wobei das Additiv ausgewählt ist aus einer Gruppe, die aus Retentionsmitteln und Nassverfestigern besteht; und
d) Herstellen des Schichtsystems aus der wenigstens einen Faserstoffsuspension.

2. Verfahren nach Anspruch 1, **dadurch gekennzeichnet, dass** in Schritt a) als wiederaufbereitetes Faserstoffgemisch Altpapier, insbesondere krafthaltige Altpapiersorten der Hauptgruppe 4 und/oder OCC-Altpapier verwendet wird.

3. Verfahren nach Anspruch 1 oder 2, **dadurch gekennzeichnet, dass** ein Schichtsystem (18) hergestellt wird, welches einen Ascheanteil von höchstens 15 Gew.-%, insbesondere von höchstens 8 Gew.-% und vorzugsweise von höchstens 4 Gew.-% aufweist und/oder welches einen Anteil von mindestens 80 %, vorzugsweise von mindestens 95 % des bereitgestellten Altpapiers enthält.

4. Verfahren nach einem der Ansprüche 1 bis 3, **dadurch gekennzeichnet, dass** wenigstens einer Faserstoffsuspension vor dem Herstellen des Schichtsystems Frischfasern, insbesondere Zellstoff, zugemischt werden, wobei der Anteil der Frischfasern an den Gesamtfasern der Faserstoffsuspension vorzugsweise höchstens 20 Gew.-% beträgt.

5. Verfahren nach einem der Ansprüche 1 bis 4, **dadurch gekennzeichnet, dass** zum Aufbereiten der Faserstoffsuspension ein Sortierer (28) und/oder eine vorzugsweise mehrstufige Cleaneranlage (30) und/oder ein Disperger (44) und/oder eine Flotationseinrichtung (32) und/oder eine Variospliteinrichtung (38) verwendet wird.

6. Verfahren nach einem der Ansprüche 1 bis 5, **dadurch gekennzeichnet, dass** das Schichtsystem (18) mit wenigstens zwei und vorzugsweise mit wenigstens drei Schichten (16a-c) hergestellt wird.

7. Verfahren nach Anspruch 6, **dadurch gekennzeichnet, dass** wenigstens eine äußere Schicht (16a, 16b) des Schichtsystems (18) poröser als eine darunterliegende innere Schicht (16c) des Schichtsystems (18) hergestellt wird und/oder dass wenigstens eine innere Schicht (16c) des Schichtsystems (18) poröser als eine weiter außen liegende Schicht (16a, 16b) des Schichtsystems (18) hergestellt wird und/oder dass alle Schichten (16a, 16b, 16c) des Schichtsystems (18) mit einer zumindest im Wesentlichen gleichen Porosität hergestellt werden.

8. Verfahren nach Anspruch 7, **dadurch gekennzeichnet, dass** wenigstens eine Schicht (16a, 16b) des Schichtsystems (18) einen Mahlgrad von höchstens 25°SR, insbesondere einen Mahlgrad zwischen 20°SR und 8°SR, aufweist und/oder dass wenigstens eine Schicht (16c) des Schichtsystems (18) einen Mahlgrad von mindestens 8°SR, insbesondere einen Mahlgrad zwischen 15°SR und 60°SR, aufweist.

9. Verfahren nach einem der Ansprüche 1 bis 8, **dadurch gekennzeichnet, dass** das Additiv der Faserstoffsuspension bezogen auf die Trockenmasse in einem Gewichtsanteil von höchstens 5,0 % zugegeben wird und/oder dass das Additiv ein Retentionsmittel umfasst, welches der Suspension bezogen auf die Trockenmasse in einem Gewichtsanteil von höchstens 1,2 %, insbesondere zwischen 0,2 % und 0,9 % zugegeben wird, und/oder dass das Additiv einen Nassverfestiger umfasst, welcher der Suspension bezogen auf die Trockenmasse in einem Gewichtsanteil von höchstens 2,2 %, insbesondere zwischen 0,5 % und 2,0 % zugegeben wird.

10. Verfahren nach einem der Ansprüche 1 bis 9, **dadurch gekennzeichnet, dass** als Additiv wenigstens ein Retentionsmittel aus der Gruppe Polyacrylamide, Polyethylenimine und Polyamidimine und/oder wenigstens ein Nassfestmittel aus der Gruppe Polyamidoamin-Epichlorhydrinharze, Epoxidharze, Polyaminharze, Isocyanatharze, Melamin-Formaldehydharze, Harnstoff-Formaldehydharze, Formaldehydharze, Dialdehydstärke, Glyoxal, Glutaraldehyd und/oder ein Copolymer aus wenigstens zwei der aufgeführten Substanzen verwendet wird.

11. Verfahren nach einem der Ansprüche 1 bis 10, **dadurch gekennzeichnet, dass** bei der Herstellung des Schichtsystems (18) anfallendes Prozesswasser der Kartonmaschine (22) gereinigt, insbesondere mittels einer Mikroflotationseinrichtung entascht und/oder insbesondere zumindest überwiegend von Feinstoffen befreit wird und/oder zum Herstellen wenigstens einer Faserstoffsuspension verwendet wird.

12. Verfahren nach einem der Ansprüche 1 bis 11, **dadurch gekennzeichnet, dass** wenigstens ein Parameter aus der Gruppe Flächengewicht, Feuchtigkeitsgehalt, Dichte, Reißlänge trocken, Reißlänge feucht, Luftdurchlässigkeit, Ascheanteil, Imprägnierbarkeit, insbesondere mit Hilfe einer Ultraschallmessung, und Porosität des hergestellten Kernkartons (20) ermittelt wird.

13. Verfahren nach einem der Ansprüche 1 bis 12, **dadurch gekennzeichnet, dass** wenigstens ein Kernkarton (20) zum Herstellen eines Schichtstoffs (58), insbesondere eines HPL-Schichtstoffs (58) und/oder eines CPL-Schichtstoffs (58) und/oder einer Kompaktplatte und/oder als Trägermaterial, insbesondere für Harze oder harzähnlichen Substanzen verwendet wird.

14. Verfahren nach Anspruch 13, **dadurch gekennzeichnet, dass** der wenigstens eine Kernkarton (20) zum Herstellen des Schichtstoffs (58) mit einem Harz und/oder einer harzähnlichen Substanz imprägniert und/oder mit einem Harz und/oder einer harzähnlichen Substanz vorimprägniert und/oder getrocknet und/oder zugeschnitten und/oder mit wenigstens einem Vorimprägnat verpresst wird.

15. Verfahren nach Anspruch 14, **dadurch gekennzeichnet, dass** das Harz ausgewählt ist aus einer Gruppe, die Phenol-Harze, Phenolformaldehyd-Harze, MelaminHarze und Melaminformaldehyd-Harze umfasst, und/oder dass der Kernkarton (20) mit 30 Gew.-% bis 100 Gew.-% Harz imprägniert wird.

16. Verfahren nach einem der Ansprüche 13 bis 15, **dadurch gekennzeichnet, dass** mindestens zwei Kernkartons (20) zum Herstellen des Schichtstoffs (58) aufeinander angeordnet, insbesondere gestapelt werden.

17. Verfahren nach einem der Ansprüche 13 bis 16, **dadurch gekennzeichnet, dass** wenigstens ein Kernkarton (20) kaschiert wird, wobei insbesondere wenigstens eine Folie (68) aus einem Kunststoff und/oder wenigstens ein vorzugsweise von mit einem Muster bedrucktes Dekorpapier (70) und/oder wenigstens ein Trennpapier auf dem Kernkarton (20) angeordnet wird.

18. Verfahren nach einem der Ansprüche 13 bis 17, **dadurch gekennzeichnet, dass** der wenigstens eine, mit dem Harz imprägnierte und/oder vorimprägnierte Kernkarton (20) zum Herstellen des Schichtstoffs (58) zumindest über den Schmelzpunkt des Harzes erwärmt, verpresst, zumindest unter den Schmelzpunkt des Harzes abgekühlt und gegebenenfalls weiterbearbeitet wird.

19. Kernkarton (20) zur Herstellung eines Schichtstoffs (58), wobei der Kernkarton (20) ein Schichtsystem (18) mit wenigstens einer Schicht (16a-c) aufweist und wobei das Schichtsystem (18) zumindest anteilig aus einem wiederaufbereitetem Faserstoffgemisch besteht, **dadurch gekennzeichnet, dass** das Schichtsystem (18) einen Ascheanteil von höchstens 15 Gew.-% aufweist und dass die wenigstens eine Schicht (16a-c) des Schichtsystems (18):
a) zumindest einen Anteil eines wiederaufbereiteten Faserstoffgemischs umfasst, welches vor der Aufbereitung aus einer Gruppe ausgewählt wurde, die:
- einen Feinstoffanteil nach Brecht-Holl von höchsten 50 Gew.-%;
- einen Langfaserstoffanteil nach Brecht-Holl von mindestens 10 Gew.-%;
- einen Kurzfaseranteil nach Brecht-Holl von höchstens 60 Gew.-%; und
- einen Ascheanteil nach ISO 1762 von höchstens 20 Gew.-% aufweist; und
b) zumindest ein Additiv umfasst, welches ausgewählt ist aus einer Gruppe, die aus Retentionsmitteln und Nassverfestigern besteht.

20. Kernkarton (20) nach Anspruch 19, **dadurch gekennzeichnet, dass** das Schichtsystem (18) einen Ascheanteil von höchstens 8 Gew.-% und vorzugsweise von höchstens 4 Gew.-% und/oder einen Anteil an Frischfasern von höchstens 20 Gew.-% und/oder einen Anteil an wiederaufbereitetem Faserstoffgemisch von mindestens 80 %, insbesondere von mindestens 95 % aufweist.

21. Kernkarton (20) nach Anspruch 19 oder 20, **dadurch gekennzeichnet, dass** das Schichtsystem (18) frei von grenzflächenaktiven Substanzen ausgebildet ist.

22. Kernkarton (20) nach einem der Ansprüche 19 bis 21, **dadurch gekennzeichnet, dass** das Schichtsystem (18) mindestens zwei, vorzugsweise mindestens drei und insbesondere vier Schichten (16a-c) aufweist.

23. Kernkarton (20) nach Anspruch 22, **dadurch gekennzeichnet, dass** wenigstens eine äußere Schicht (16a, 16b) des Schichtsystems (18) poröser als eine darunterliegende innere Schicht (16c) des Schichtsystems (18) ausgebildet ist und/oder dass wenigstens eine innere Schicht (16c) des Schichtsystems (18) poröser als eine weiter außen liegende Schicht (16a, 16b) des Schichtsystems (18) ausgebildet ist und/oder dass alle Schichten (16a, 16b, 16c) des Schichtsystems (18) eine zumindest im Wesentlichen gleiche Porosität aufweisen.

24. Kernkarton (20) nach einem der Ansprüche 19 bis 23, **dadurch gekennzeichnet, dass** jede Schicht (16a-c) des Schichtsystems (18) einen Ascheanteil von höchstens 15 Gew.-% und/oder einen Anteil an Frischfasern von höchstens 20 Gew.-% aufweist.

25. Schichtstoff (58), welcher wenigstens einen mittels eines Verfahrens nach einem der Ansprüche 1 bis 18 erhältlichen und/oder erhaltenen Kernkarton (20) und/oder wenigstens einen Kernkarton (20) gemäß einem der Ansprüche 19 bis 24 umfasst.

26. Schichtstoff (58) nach Anspruch 25, **dadurch gekennzeichnet, dass** dieser als HPL-Schichtstoff (58), CPL-Schichtstoff (58), Kompaktplatte, Overlay, Dekorpapier, Dekorkarton, Dekorpappe, Folie, Vliesmaterial, Vorimprägnat, Trägerplatte, Fasemerbundwerkstoff, Gegenzug und/oder Trägermaterial, insbesondere für Harze und/oder harzähnliche Substanzen ausgebildet ist.

27. Schichtstoff (58) nach Anspruch 25 oder 26, **dadurch gekennzeichnet, dass** dieser mindestens 2 Lagen des Kernkartons (20) umfasst.

28. Vorrichtung (10) zum Durchführen eines Verfahrens nach einem der Ansprüche 1 bis 18 und/oder zur Herstellung eines Kernkartons (20) gemäß einem der Ansprüche 19 bis 24, umfassend:
a) wenigstens eine Einrichtung (24) zum Herstellen einer Faserstoffsuspension, die zumindest anteilig aus einem wiederaufbereiteten Faserstoffgemisch besteht;
b) wenigstens eine Aufbereitungseinrichtung (26), mittels welcher zumindest eine Entaschung der Faserstoffsuspension durchführbar ist, bis ein Ascheanteil der trockenen Fraktion der Faserstoffsuspension höchstens 15 Gew.-% beträgt;
c) wenigstens eine Dosierungseinrichtung (50), mittels welcher wenigstens ein Additiv aus einer Gruppe, die aus Retentionsmitteln und Nassverfestigern besteht, zur Faserstoffsuspension zudosierbar ist; und
d) wenigstens eine Kartonmaschine (22), mittels welcher zumindest das Schichtsystem (18) des Kernkartons (20) aus der wenigstens einen Faserstoffsuspension herstellbar ist.

## Claims

1. Method for producing a core cardboard (20) for a laminate (58), wherein the core cardboard (20) has a laminar system (18) with at least one layer (16a-c), **characterized in that** the method includes at least the following steps of:
a) providing a reprocessed fibrous mixture having at least the following characteristics:
- the fine fraction according to Brecht-Holl is at most 50 % by weight;
- the long fiber fraction according to Brecht-Holl is at least 10 % by weight;
- the short fiber fraction according to Brecht-Holl is at most 60 % by weight; and
- the ash fraction according to ISO 1762 is at most 20 % by weight,
b) producing at least one fibrous suspension, which contains at least a fraction of the fibrous mixture provided,
c) processing the at least one fibrous suspension by carrying out at least one de-ashing of the fibrous suspension until an ash fraction of the dry component of the fibrous suspension is at most 15 % by weight, and by adding at least one additive to the at least one fibrous suspension, the additive being selected from a group consisting of retention agents and wet strength agents; and
d) producing the laminar system from the at least one fibrous suspension.

2. Method according to claim 1, **characterized in that** in step a) waste paper, in particular kraft containing waste paper sorts of the main group 4 and/or OCC waste paper, is used as the reprocessed fibrous mixture.

3. Method according to claim 1 or 2, **characterized in that** a laminar system (18) is produced, which has an ash fraction of at most 15 % by wt., in particular of at most 8 % by wt. and preferably of at most 4 % by wt. and/or which has a fraction of at least 80 %, preferably of at least 95 % of the provided waste paper.

4. Method according to any one of claims 1 to 3, **characterized in that** fresh fibers, in particular cellulose, are mixed with at least one fibrous suspension before producing the laminar system, wherein the fraction of the fresh fibers on the overall fibers of the fibrous suspension is preferably at most 20 % by wt.

5. Method according to any one of claims 1 to 4, **characterized in that** a sorter (28) and/or a preferably multi-stage cleaner system (30) and/or a disperser (44) and/or a flotation device (32) and/or a variosplit device (38) are used for processing the fibrous suspension.

6. Method according to any one of claims 1 to 5, **characterized in that** the laminar system (18) is produced with at least two and preferably with at least three layers (16a-c).

7. Method according to claim 6, **characterized in that** at least one outer layer (16a, 16b) of the laminar system (18) is formed more porous than an underlying inner layer (16c) of the laminar system (18) and/or that at least one inner layer (16c) of the laminar system (18) is produced more porous than a layer (16a, 16b) of the laminar system (18) located farther outside and/or that all of the layers (16a, 16b, 16c) of the laminar system (18) are produced with an at least substantially identical porosity.

8. Method according to claim 7, **characterized in that** at least one layer (16a, 16b) of the laminar system (18) has a degree of grinding of at most 25°SR, in particular a degree of grinding between 20°SR and 8°SR, and/or that at least one layer (16c) of the laminar system (18) has a degree of grinding of at least 8°SR, in particular a degree of grinding between 15°SR and 60°SR.

9. Method according to any one of claims 1 to 8, **characterized in that** the additive is added to the fibrous suspension related to the dry matter in a weight fraction of at most 5.0 % and/or that the additive includes a retention agent, which is added to the suspension in a weight fraction of at most 1.2 %, in particular between 0.2 % and 0.9 %, related to the dry matter, and/or that the additive includes a wet strength agent, which is added to the suspension in a weight fraction of at most 2.2 %, in particular between 0.5 % and 2.0 % related to the dry matter.

10. Method according to any one of claims 1 to 9, **characterized in that** at least one retention agent from the group of polyacrylamides, polyethylenimines and polyamidimines and/or at least one wet strength agent from the group of polyamidoamine epichlorhydrin resins, epoxy resins, polyamine resins, isocyanate resins, melamine formaldehyde resins, urea formaldehyde resins, formaldehyde resins, dialdehyde starch, glyoxal, glutaraldehyde and/or a copolymer of at least two of the listed substances is used as the additive.

11. Method according to any one of claims 1 to 10, **characterized in that** process water of the card machine (22) arising in the production of the laminar system (18) is cleaned, in particular de-ashed by means of a micro flotation device, and/or in particular at least predominantly freed of fine materials and/or used for producing at least one fibrous suspension.

12. Method according to any one of claims 1 to 11, **characterized in that** at least one parameter of the group of grammage, moisture content, density, dry breaking length, wet breaking length, air permeability, ash fraction, capability of impregnating, in particular with the aid of an ultrasonic measurement, and porosity of the produced core cardboard (20) is determined.

13. Method according to any one of claims 1 to 12, **characterized in that** at least one core cardboard (20) is used for producing a laminate (58), in particular an HPL laminate (58) and/or a CPL laminate (58) and/or a compact plate and/or as a support material in particular for resins or resin-like substances.

14. Method according to claim 13, **characterized in that** the at least one core cardboard (20) for producing the laminate (58) is impregnated with a resin and/or a resin-like substance and/or is pre-impregnated with a resin and/or a resin-like substance and/or dried and/or cut and/or pressed with at least one pre-impregnate.

15. Method according to claim 14, **characterized in that** the resin is selected from a group including phenol resins, phenol formaldehyde resins, melamine resins and melamine formaldehyde resins, and/or that the core cardboard (20) is impregnated with 30 % by wt. to 100 % by wt. of resin.

16. Method according to any one of claims 13 to 15, **characterized in that** at least two core cards (20) are disposed one on top of the other, in particular stacked for producing the laminate (58).

17. Method according to any one of claims 13 to 16, **characterized in that** at least one core cardboard (20) is lined, wherein in particular at least one foil (68) of a plastic and/or at least one decorative paper (70) preferably printed with a pattern and/or at least one release paper is disposed on the core cardboard (20).

18. Method according to any one of claims 13 to 17, **characterized in that** the at least one core cardboard (20) impregnated and/or pre-impregnated with the resin is heated at least above the melting point of the resin, pressed, cooled at least below the melting point of the resin and optionally further processed for producing the laminate (58).

19. Core cardboard (20) for producing a laminate (58), wherein the core cardboard (20) has a laminar system (18) with at least one layer (16a-c) and wherein the laminar system (18) is at least proportionally composed of a reprocessed fibrous mixture, **characterized in that** the laminar system (18) has an ash fraction of at most 15 % by wt. and that the at least one layer (16a-c) of the laminar system (18) includes:
a) at least a fraction of a reprocessed fibrous mixture, which has been selected from a group before processing, which has:
- a fine fraction according to Brecht-Holl of at most 50 % by weight;
- a long fiber fraction according to Brecht-Holl of at least 10 % by weight;
- a short fiber fraction according to Brecht-Holl of at most 60 % by weight; and
- an ash fraction according to ISO 1762 of at most 20 % by weight; and
b) includes at least one additive, which is selected from a group consisting of retention agents and wet strength agents.

20. Core cardboard (20) according to claim 19, **characterized in that** the laminar system (18) has an ash fraction of at most 8 % by wt. and preferably of at most 4 % by wt. and/or a fraction of fresh fibers of at most 20 % by wt. and/or a fraction of reprocessed fibrous mixture of at least 80 %, in particular of at least 95 %.

21. Core cardboard (20) according to claims 19 or 20, **characterized in that** the laminar system (18) is formed free of surfactants.

22. Core cardboard (20) according to any one of claims 19 to 21, **characterized in that** the laminar system (18) has at least two, preferably at least three and in particular four layers (16a-c).

23. Core cardboard (20) according to claim 22, **characterized in that** at least one outer layer (16a, 16b) of the laminar system (18) is formed more porous than an underlying inner layer (16c) of the laminar system (18) and/or that at least one inner layer (16c) of the laminar system (18) is formed more porous than a layer (16a, 16b) of the laminar system (18) located farther outside and/or that all of the layers (16a, 16b, 16c) of the laminar system (18) have an at least substantially identical porosity.

24. Core cardboard (20) according to any one of claims 19 to 23, **characterized in that** each layer (16a-c) of the laminar system (18) has an ash fraction of at most 15 % by wt. and/or a fraction of fresh fibers of at most 20 % by wt.

25. Laminate (58), which includes at least one core cardboard (20) obtainable and/or obtained by means of a method according to any one of claims 1 to 18, and/or at least one core cardboard (20) according to any one of claims 19 to 24.

26. Laminate (58) according to claim 25, **characterized in that** it is formed as an HPL laminate (58), CPL laminate (58), compact plate, overlay, decorative paper, decorative card, decorative paperboard, foil, non-woven material, preimpregnate, support plate, fibrous composite, back-pull and/or support material in particular for resins and/or resin-like substances.

27. Laminate (58) according to claim 25 or 26, **characterized in that** it includes at least 2 plies of the core cardboard (20).

28. Apparatus (10) for performing a method according to any one of claims 1 to 18 and/or for producing a core cardboard (20) according to any one of claims 19 to 24, including:
a) at least one device (24) for producing a fibrous suspension, which at least proportionally is composed of a reprocessed fibrous mixture;
b) at least one processing device (26), by means of which at least one de-ashing of the fibrous suspension can be performed until an ash fraction of the dry component of the fibrous suspension is at most 15 % by wt.;
c) at least one metering device (50), by means of which at least one additive from a group consisting of retention agents and wet strength agents can be metered to the fibrous suspension; and
d) at least one card machine (22), by means of which at least the laminar system (18) of the core cardboard (20) can be produced of the at least one fibrous suspension.

## Revendications

1. Procédé de fabrication d'un carton de base (20) pour un stratifié (58), le carton de base (20) présentant un système de couches (18), avec au moins une couche (16a - c), **caractérisé en ce que** le procédé comprend au moins les étapes suivantes consistant à :
a) mettre à disposition un mélange recyclé de matières à base de fibres, lequel présente au moins les propriétés suivantes :
- la proportion de matières fines selon Brecht-Holl est au maximum de 50 % en poids ;
- la proportion de matières à fibres longues selon Brecht-Holl est d'au moins 10 % en poids ;
- la proportion de fibres courtes selon Brecht-Holl est au maximum de 60 % en poids
et
- la proportion de cendres selon la norme ISO 1762 est au maximum de 20 % en poids ;
b) produire au moins une suspension de matières à base de fibres, laquelle contient au moins une part du mélange de matières à base de fibres mis à disposition ;
c) préparer la au moins une suspension de matières à base de fibres, en effectuant au moins un décendrage de la suspension de matières à base de fibres, jusqu'à ce qu'une proportion de cendres de la fraction sèche de la suspension de matières à base de fibres soit au maximum de 15 % en poids et en ajoutant au moins un additif à la au moins une suspension de matières à base de fibres, l'additif étant sélectionné dans le groupe se composant d'agents de rétention et de solidifiants humides et
d) produire le système de couches à partir de la au moins une suspension de matières à base de fibres.

2. Procédé selon la revendication 1, **caractérisé en ce que**, au cours de l'étape a), du vieux papier, en particulier des sortes de vieux papier kraft du groupe principal 4 et / ou du vieux papier en vieux carton ondulé, est utilisé comme mélange recyclé de matières à base de fibres.

3. Procédé selon la revendication 1 ou 2, **caractérisé en ce qu'**un système de couches (18) est produit, lequel présente une proportion de cendres d'au maximum 15 % en poids, en particulier d'au maximum 8 % en poids et de préférence d'au maximum 4 % en poids et / ou contient une proportion d'au moins 80 %, de préférence d'au moins 95 % du vieux papier mis à disposition.

4. Procédé selon l'une des revendications 1 à 3, **caractérisé en ce qu'**au moins des fibres vierges, en particulier de la cellulose, sont ajoutées à une suspension de matières à base de fibres avant la production du système de couches, la proportion des fibres vierges dans le total des fibres de la suspension de matières à base de fibres étant de préférence au maximum de 20 % en poids.

5. Procédé selon l'une des revendications 1 à 4, **caractérisé en ce qu'**un trieur (28) et / ou une installation de nettoyage, de préférence à plusieurs niveaux (30), et / ou un disperseur (44) et / ou un dispositif de flottation (32) et / ou un dispositif de séparation Vario-Split (38) est utilisé pour préparer la suspension de matières à base de fibres.

6. Procédé selon l'une des revendications 1 à 5, **caractérisé en ce que** le système de couches (18) est produit avec au moins deux et, de préférence, avec au moins trois couches (16a - c).

7. Procédé selon la revendication 6, **caractérisé en ce qu'**au moins une couche extérieure (16a, 16b) du système de couches (18) est produite plus poreuse qu'une couche intérieure sous-jacente (16c) du système de couches (18) et / ou qu'au moins une couche intérieure (16c) du système de couches (18) est plus poreuse qu'une couche plus à l'extérieur (16a, 16b) du système de couches (18) et / ou que toutes les couches (16a, 16b, 16c) du système de couches (18) sont produites avec au moins essentiellement la même porosité.

8. Procédé selon la revendication 7, **caractérisé en ce qu'**au moins une couche (16a, 16b) du système de couches (18) présente un indice d'égouttage d'au maximum 25° SR, en particulier un indice d'égouttage entre 20° SR et 8° SR et / ou qu'au moins une couche (16c) du système de couches (18) présente un indice d'égouttage d'au moins 8° SR, en particulier un indice d'égouttage entre 15° SR et 60° SR.

9. Procédé selon l'une des revendications 1 à 8, **caractérisé en ce que** l'additif de la suspension de matières à base de fibres est ajouté, par rapport à la masse sèche, dans une proportion en poids d'au maximum 5,0 % et / ou que l'additif comprend un agent de rétention, lequel est ajouté à la suspension, par rapport à la masse sèche, dans une proportion en poids d'au maximum 1,2 %, en particulier entre 0,2 % et 0,9 % et / ou que l'additif comprend un solidifiant humide, lequel est ajouté à la suspension, par rapport à la masse sèche, dans une proportion en poids d'au maximum 2,2 %, en particulier entre 0,5 % et 2,0 %.

10. Procédé selon l'une des revendications 1 à 9, **caractérisé en ce qu'**au moins un agent de rétention du groupe, se composant de polyacrylamides, de polyéthylène-imines et de polyamide-imines et / ou qu'au moins un agent de résistance à l'humidité du groupe, se composant de résines de polyamidoamine-épichlorhydrine, de résines époxydes, de résines polyamines, de résines isocyanates, de résines mélamine-formaldéhydes, de résines d'urée-formaldéhyde, de résines formaldéhydes, de dialdéhyde d'amidon, d'éthanedial, de glutaraldéhyde et / ou d'un copolymère, constitué d'au moins deux des substances mentionnées, est utilisé comme additif.

11. Procédé selon l'une des revendications 1 à 10, **caractérisé en ce que** l'eau de processus de la machine à carton (22), générée lors de la production du système de couches (18), est épurée, qu'en particulier elle est décendrée au moyen d'un dispositif de micro-flottation et / ou qu'en particulier elle est débarrassée au moins essentiellement de particules fines et / ou qu'elle est utilisée pour la production au moins d'une suspension de matières à base de fibres.

12. Procédé selon l'une des revendications 1 à 11, **caractérisé en ce qu'**au moins un paramètre du groupe se composant du grammage, de la teneur en humidité, de la densité, de la longueur de rupture à sec, de la longueur de rupture humide, de la perméabilité à l'air, de la proportion de cendres, de l'imprégnabilité, en particulier à l'aide d'une mesure par ultrasons, et de la porosité du carton de base (20) fabriqué est déterminé.

13. Procédé selon l'une des revendications 1 à 12, **caractérisé en ce qu'**au moins un carton de base (20), destiné à la production d'un stratifié (58), en particulier d'un stratifié HPL (58) et / ou d'un stratifié CPL (58) et / ou d'un panneau compact et / ou en tant que matériau support, est utilisé en particulier pour des résines ou des substances analogues à des résines.

14. Procédé selon la revendication 13, **caractérisé en ce que** l'au moins un carton de base (20), destiné à la production du stratifié (58), est imprégné avec une résine et / ou une substance analogue à une résine et / ou est pré-imprégné avec une résine et / ou une substance analogue à une résine et / ou est séché et / ou découpé et / ou comprimé avec au moins un pré-imprégné.

15. Procédé selon la revendication 14, **caractérisé en ce que** la résine est sélectionnée dans un groupe qui comprend des résines phénoliques, des résines de phénolformaldéhyde, des résines de mélamine et des résines de mélamineformaldéhyde et / ou que le carton de base (20) est imprégné avec 30 % en poids à 100 % en poids de résine.

16. Procédé selon l'une des revendications 13 à 15, **caractérisé en ce qu'**au moins deux cartons de base (20), destinés à la fabrication du stratifié (58), sont agencés l'une sur l'autre, qu'ils sont en particulier empilés.

17. Procédé selon l'une des revendications 13 à 16, **caractérisé en ce qu'**au moins un carton de base (20) est contrecollé, en particulier au moins une feuille (68) en matière plastique et / ou au moins un papier de décoration (70), imprimé de préférence avec un motif et / ou au moins un papier de séparation étant agencé sur le carton de base (20).

18. Procédé selon l'une des revendications 13 à 17, **caractérisé en ce que** l'au moins un carton de base (20), imprégné et / ou pré-imprégné avec la résine, destiné à la production du stratifié (58), est chauffé au moins au-dessus du point de fusion de la résine, comprimé, refroidie au moins au-dessous du point de fusion de la résine et traité ultérieurement, le cas échéant.

19. Carton de base (20), destiné à produire un stratifié (58), le carton de base (20) présentant un système de couches (18) avec au moins une couche (16a - c) et le système de couches (18) se composant au moins proportionnellement d'un mélange recyclé de matières à base de fibres, **caractérisé en ce que** le système de couches (18) présente une proportion de cendres d'au maximum 15 % en poids et que la au moins une couche (16a - c) du système de couches (18) comprend :
a) au moins une proportion d'un mélange recyclé de matières à base de fibres, lequel a été sélectionné avant la préparation, dans un groupe qui présente :
- une proportion de matières fines selon Brecht-Holl d'au maximum 50 % en poids ;
- une proportion de matières à fibres longues selon Brecht-Holl d'au moins 10 % en poids ;
- une proportion de fibres courtes selon Brecht-Holl est d'au maximum 60 % en poids et
- une proportion de cendres selon la norme ISO 1762 d'au maximum 20 % en poids et
b) comprend au moins un additif, lequel est sélectionné dans un groupe qui se compose d'agents de rétention et de solidifiants humides.

20. Carton de base (20) selon la revendication 19, **caractérisé en ce que** le système de couches (18) présente une proportion de cendres d'au maximum 8 % en poids et de préférence d'au maximum 4 % en poids et / ou une proportion de fibres vierges d'au maximum 20 % en poids et / ou une proportion d'un mélange recyclé de matières à base de fibres d'au moins 80 %, en particulier d'au moins 95 %.

21. Carton de base (20) selon la revendication 19 ou 20, **caractérisé en ce que** le système de couches (18) est constitué exempt de substances tensio-actives.

22. Carton de base (20) selon l'une des revendications 19 à 21, **caractérisé en ce que** le système de couches (18) présente au moins deux, de préférence au moins trois et en particulier quatre couches (16a - c).

23. Carton de base (20) selon la revendication 22, **caractérisé en ce qu'**au moins une couche extérieure (16a, 16b) du système de couches (18) est constituée plus poreuse qu'une couche intérieure sous-jacente (16c) du système de couches (18) et / ou qu'au moins une couche intérieure (16c) du système de couches (18) est constituée plus poreuse qu'une couche plus à l'extérieur (16a, 16b) du système de couches (18) et / ou que toutes les couches (16a, 16b, 16c) du système de couches (18) présentent une porosité au moins essentiellement identique.

24. Carton de base (20) selon l'une des revendications 19 à 23, **caractérisé en ce que** chaque couche (16a - c) du système de couches (18) présente une proportion de cendres d'au maximum 15 % en poids et / ou une proportion de fibres vierges d'au maximum 20 % en poids.

25. Stratifié (58), lequel comprend au moins un carton de base (20), disponible et / ou obtenu au moyen d'un procédé selon l'une des revendications 1 à 18 et / ou au moins un carton de base (20), conformément à l'une des revendications 19 à 24.

26. Stratifié (58) selon la revendication 25, **caractérisé en ce que** celui-ci est constitué en tant que stratifié HPL (58), stratifié CPL (58), panneau compact, overlay, papier de décoration, carton mince de décoration, carton épais de décoration, feuille, matériau non tissé, préimprégnat, panneau support, matériau composite renforcé par des fibres, contretraction et / ou matériau support, en particulier pour des résines et / ou des substances analogues à des résines.

27. Stratifié (58) selon la revendication 25 ou 26, **caractérisé en ce que** celui-ci comprend au moins 2 couches du carton de base (20).

28. Mécanisme (10), destiné à l'exécution d'un procédé selon l'une des revendications 1 à 18 et / ou à la production d'un carton de base (20), conformément à l'une des revendications 19 à 24, comprenant :
a) au moins un dispositif (24), destiné à la fabrication d'une suspension de matières à base de fibres, qui se compose au moins proportionnellement d'un mélange recyclé de matières à base de fibres ;
b) au moins un dispositif de préparation (26), au moyen duquel au moins un décendrage de la suspension de matières à base de fibres peut être exécuté, jusqu'à ce qu'une proportion de cendres de la fraction sèche de la suspension de matières à base de fibres fasse au maximum 15 % en poids ;
c) au moins un dispositif de dosage (50), au moyen duquel au moins un additif d'un groupe, se composant d'agents de rétention et de solidifiants humides, peut être ajouté de manière dosée à la suspension de matières à base de fibres et
d) au moins une machine à carton (22), au moyen de laquelle au moins le système de couches (18) du carton de base (20) peut être produit à partir de la au moins une suspension de matières à base de fibres.
